(19) Europäisches Patentamt
European Patent Office
Office européen des brevets

(11) EP 2 821 249 B1

(12) **EUROPEAN PATENT SPECIFICATION**

(45) Date of publication and mention of the grant of the patent:
**29.03.2017 Bulletin 2017/13**

(21) Application number: **13754294.0**

(22) Date of filing: **28.02.2013**

(51) Int Cl.:
***B60C 5/01*** (2006.01) ***B60C 1/00*** (2006.01)
***C08L 77/02*** (2006.01) ***C08L 101/12*** (2006.01)

(86) International application number:
**PCT/JP2013/055583**

(87) International publication number:
**WO 2013/129628 (06.09.2013 Gazette 2013/36)**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.02.2012 JP 2012044645**

(43) Date of publication of application:
**07.01.2015 Bulletin 2015/02**

(73) Proprietor: **Bridgestone Corporation**
**Tokyo 104-8340 (JP)**

(72) Inventors:
- **FUDEMOTO, Hiroyuki**
**Tokyo 104-8340 (JP)**
- **HARADA, Takashi**
**Tokyo 104-8340 (JP)**
- **GAO, Tong**
**Tokyo 104-8340 (JP)**
- **HONJO, Atsuko**
**Tokyo 104-8340 (JP)**

(74) Representative: **Oxley, Robin John George**
**Marks & Clerk LLP**
**90 Long Acre**
**London WC2E 9RA (GB)**

(56) References cited:
**EP-A1- 1 995 275** **JP-A- 2003 104 006**
**JP-A- 2011 162 167**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 821 249 B1

## Description

[Technical Field]

The present invention relates to a tire to be fitted to a rim and, in particular, to a tire in which at least a portion is formed of a material including a resin.

[Background Art]

Conventionally, in vehicles such as passenger cars, pneumatic tires constructed from rubber, organic fiber materials, steel members, and the like, have been used.
In recent years, the use of resin materials, particularly thermoplastic resins and thermoplastic elastomers, as the tire materials, has been studied in view of weight reduction, ease of molding, and easy recycling.
For example, Japanese Patent Application Publication (JP-A) Nos. 2003-104008 and 03-143701 disclose pneumatic tires formed by using thermoplastic polymer materials.
EP 1 995 275 discloses an elastomeric composition (resin) having a sea/island structure.

[Summary of the Invention]

[Technical Problem]

Tires in which a thermoplastic polymer material is used can be produced easily and inexpensively compared to conventional tires made of rubber. However, when the tire frame is formed of a uniform thermoplastic polymer material which is not equipped with a reinforcing member such as a carcass ply, there is room for improvement in terms of resistance to stress, internal pressure and the like, compared to conventional tires made of rubber.
Realization of performance that compares favorably to conventional rubber-made tires, while also achieving an increase in manufacturing efficiency at low cost when manufacturing tires using a thermoplastic polymer material, is demanded.
These circumstances have created demand for a tire with excellent impact resistance properties that is formed using a resin-containing material.

Solution to Problem

The tire of the present invention is a tire having a circular tire frame formed of a resin-containing material, wherein the material has a sea/island structure including a sea phase constituted by a first resin material, and an island phase constituted by a second resin material that is softer than the sea phase.

Advantageous Effects of Invention

According to the invention, a tire with excellent impact resistance properties is provided.

BRIEF DESCRIPTION OF DRAWINGS

Fig. 1A is a perspective view illustrating a partial cross-section of a tire according to an embodiment of the present invention.
Fig. 1B is a cross-sectional view illustrating a bead portion fitted onto a rim in the embodiment of the present invention.
Fig. 2 is a cross-sectional view taken along a tire rotation axis, which illustrates a state where a reinforcing cord is embedded in a crown portion of a tire case of the tire according to the first embodiment of the present invention.
Fig. 3 is a diagram illustrating an operation of embedding the reinforcing cord in the crown portion of the tire case by the use of a cord heating apparatus and rollers.
Fig. 4A is a cross-sectional view taken along a tire width direction according to an embodiment of the present invention.
Fig. 4B is an enlarged cross-sectional view taken along a tire width direction illustrating a bead portion in a state in which a rim is fitted to the tire in an embodiment of the present invention.
Fig. 5 is a cross-sectional view taken along a tire width direction, which illustrates the region around a reinforcing layer, of the tire according to the second embodiment of the present invention.

BEST MODE FOR CARRYING OUT THE INVENTION

As described above, the tire of the invention is a tire, having a circular tire frame formed of a resin-containing material, wherein the material has a sea/island structure including a sea phase constituted by a first resin material, and an island phase constituted by a second resin material that is softer than the sea phase.

Herein, in the invention, the "resin-containing material" means a substance including at least a resin, and may further include another component other than a resin, and in cases in which the resin material does not include a component other than a resin, the resin material is constituted only of resin. In the following, the "resin-containing material" is also referred to as a resin material.

In the present specification, "resin" includes thermoplastic resins, thermosetting resins, and so-called engineering plastics, but does not include natural rubber. Thermoplastic resin includes thermoplastic elastomers.

The meaning here of "elastomer" is a resin formed of a copolymer including a polymer constituting a hard segment that is crystalline and has a high melting temperature or a hard segment that has a high cohesive force, and including a polymer constituting a soft segment that is amorphous and has a low glass transition temperature.

In the tire of the invention, the resin material constituting the tire frame has a sea/island structure including a sea phase constituted by a first resin material, and an island phase constituted by a second resin material that is softer than the sea phase, thereby enabling a tire with excellent impact resistance properties to be achieved.

This is thought to be due to the fact that, in comparison to a resin material simply formed with a hard material only, the presence of a more flexible material in the material raises the elasticity of the resin material, and the resin material absorbs or rebounds against load even when imparted with external load, thereby enabling damage or defects due to external load to be suppressed.

In the invention, the island phase being softer than the sea phase means that the bending elastic modulus of the second resin material constituting the island phase is lower than the elastic modulus of the first resin material constituting the sea phase.

The above elastic modulus refers to a bending elastic modulus determined according to JIS K7171 (below in the present specification, unless otherwise stated, "elastic modulus" means bending elastic modulus).

Moreover, due to forming the tire with a resin material, the need for a vulcanization process, which was an essential process for a conventional rubber-made tire, is obviated, enabling, for example, the tire frame to be formed by injection molding or the like. Moreover, employing a resin material for the tire frame enables the structure of a tire to be simplified compared to a conventional rubber-made tire, and as a result enables a tire weight reduction to be achieved.

Explanation follows regarding the resin material constituting the tire frame of the invention, followed by specific embodiments of tires of the invention, with reference to the drawings.

Resin Material

The resin material constituting the tire frame has a sea/island structure including a sea phase constituted by a first resin material, and an island phase constituted by a second resin material that is softer than the sea phase.

The first resin material and the second resin material accordingly need to be phase separated into a respective sea phase (continuous phase), and an island phase (discontinuous phase), and the resin material constituting the tire frame has a structure in which the island phase (the second resin material) is distributed in the sea phase (the first resin material) as a matrix phase.

Distribution of the island phase constituted by the second resin material in the sea phase constituted by the first resin material may be confirmed by imaging using a scanning electron microscope (SEM).

In the sea/island structure formed of the resin material, normally the resin material having the larger volume out of the resin materials forms the sea phase that is the continuous phase, and the resin material having the smaller volume out of the resin materials tends to form the island phase that is the discontinuous phase. Consequently, in the invention, a ratio ($V_1$/ $V_2$) of a volume of the first resin material constituting the sea phase ($V_1$) to a volume of the second resin material constituting the island phase ($V_2$) preferably exceeds 1. Normally a ratio ($M_1$/ $M_2$) of a mass of the first resin material constituting the sea phase ($M_1$) to a mass of the second resin material constituting the island phase ($M_2$) tends to exceed 1.

As already stated, the "resin material" means a material including at least a resin, and may further include another component other than a resin, and in cases in which the resin material does not include a component other than a resin, the resin material is constituted only of resin. "Resin" includes thermoplastic resins, thermosetting resins, and so-called engineering plastics (including super engineering plastics), but does not include natural rubber. Resin includes elastomers. The meaning here of "elastomer" is a resin formed of a copolymer including a polymer constituting a hard segment that is crystalline and has a high melting temperature or a hard segment that has a high cohesive force, and including a polymer constituting a soft segment that is amorphous and has a low glass transition temperature.

Moreover, in the invention, the island phase constituted by the second resin material is softer than the sea

phase constituted by the first resin material. Namely, it is sufficient that the second resin material be softer in relation to the first resin material.

Accordingly, in the invention there are no particular limitations to the types of the first resin material and the second resin material as long as the relationship between first resin material and the second resin material is such that a sea/island structure forms, and as long as there is the relationship of the second resin material being softer than the first resin material. For example, an example is employing a thermoplastic elastomer that is a thermoplastic resin material formed of a copolymer including a polymer constituting a hard segment that is crystalline and has a high melting temperature, and including a polymer constituting a soft segment that is amorphous and has a low glass transition temperature, as the second resin material constituting the island phase, and employing the thermoplastic resin that is the polymer constituting the hard segment of the above thermoplastic elastomer, as the first resin material constituting the sea phase. Another example is employing a resin material that is a thermosetting resin that has been treated with a plasticizer as the second resin material constituting the island phase, and employing a thermosetting resin not treated with a plasticizer for the first resin material constituting the sea phase.

For example, the second resin material may be configured to include at least one out of a second thermoplastic resin, or a second thermosetting resin and a plasticizer.

As already stated above, constituting the tire frame from a resin material enables the tire to be formed by a simple method, such as injection molding, press molding, or the like. Generally, due to a thermosetting resin being hardened by heating, the elastic modulus tends to be higher than that of a thermoplastic resin that becomes plastic with heating. However, even when it is a thermosetting resin, the second resin material can be softened by including a thermosetting resin and a plasticizer in the resin material, enabling it to at as an impact resistant material.

Consequently, as well as a thermoplastic resin (thermoplastic elastomers included), a material combining a thermosetting resin and a plasticizer, and a combination of a thermoplastic resin (thermoplastic elastomers included) combined with a thermosetting resin and a plasticizer, may be employed as the second resin material constituting the island phase that is softer than the sea phase.

The first resin material may include at least one of a first thermoplastic resin, or a first thermosetting resin.

The are no particular limitations to the first resin material constituting the sea phase that is harder than the island phase, and plasticizing by a plasticizer is not necessary even for a thermosetting resin. By appropriately regulating the type and the quantity of plasticizer to thermosetting resin, the first resin material may be a resin material including a thermosetting resin and a plasticizer, as long as the second resin material is prepared so as to be softer than the first resin material.

The second thermoplastic resin material is preferably at least one selected from the group consisting of a thermoplastic polyolefin-based elastomer, a thermoplastic polystyrene-based elastomer, a thermoplastic polyamide-based elastomer, a thermoplastic polyurethane-based elastomer, a thermoplastic polyester-based elastomer, and a dynamically crosslinking-type thermoplastic elastomer.

The second resin material, constituting the island phase that is softer than the sea phase, preferably includes a thermoplastic elastomer with excellent elasticity from out of thermoplastic resins, and from out of these, is preferably at least one selected from the group consisting of a thermoplastic polyolefin-based elastomer, a thermoplastic polystyrene-based elastomer, a thermoplastic polyamide-based elastomer, a thermoplastic polyurethane-based elastomer, a thermoplastic polyester-based elastomer, and a dynamically crosslinking-type thermoplastic elastomer.

In particular, a preferable combination is a thermoplastic polyamide-based resin or a thermoplastic polyolefin-based resin as the first resin material, and at least one type selected from the group consisting of a thermoplastic polyester-based elastomer, a thermoplastic polyolefin-based elastomer, and a thermoplastic polyamide-based elastomer as the second thermoplastic resin. In such cases, the ratio by mass of the first resin material to the second thermoplastic resin is preferably first thermoplastic resin: second thermoplastic resin = from 55:45 to 90:10.

Moreover, the tensile elastic modulus $\gamma1$ of the first resin material and the content W1 of the first resin material in the material containing a resin, and the tensile elastic modulus $\gamma2$ of the second resin material and the content W2 of the second resin material in the material containing a resin, preferably satisfy the following Inequality (1).

$$0.0015 \leq ((\gamma1 \times W1)/(\gamma2 \times W2)) \leq 0.02 \qquad \text{Inequality (1)}$$

The coefficient expressed by $(\gamma1 \times W1)/(\gamma2 \times W2)$ is also called the elastic modulus coefficient. Selecting and employing a first resin material and a second resin material with an elastic modulus coefficient within a range of from 0.0015 to 0.02 enables a tire with more excellent impact resistance properties to be achieved.

The units for the tensile elastic modulus $\gamma1$ of the first resin material and the tensile elastic modulus $\gamma2$ of the second resin material are MPa, and the units of the content W1 of the first resin material in the material and the content W2 of the second resin material in the material are % by mass.

Explanation follows regarding resins that may be employed in the first resin material and the second resin material, and components other than the resin.

Resin

Examples of resins include thermoplastic resins (thermoplastic elastomers included), thermosetting resins, and other general use resins, as well as engineering plastics (super engineering plastics included) and the like. Explanation thereof follows in the above sequence.

Thermoplastic Resins (Thermoplastic Elastomers Included)

Thermoplastic resins (thermoplastic elastomers included) are polymer compounds that materially soften and flow with increasing temperature, and that adopt a relatively hard and strong state on cooling.

In the present specification, out of these, distinction is made between polymer compounds that materially soften and flow with increasing temperature, that adopt a relatively hard and strong state on cooling, and that have a rubber-like elasticity, considered to be thermoplastic elastomers, and polymer compounds that materially soften and flow with increasing temperature, that adopt a relatively hard and strong state on cooling, but do not have a rubber-like elasticity, considered to be non-elastomer thermoplastic resins.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Thermoplastic Polyolefin-based Elastomer

Examples of "thermoplastic polyolefin-based elastomer" include materials with at least a polyolefin constituting a hard segment that is crystalline and has a high melting temperature, and another polymer (for example the polyolefin or another polyolefin) that constitutes a soft segment that is amorphous and has a low glass transition temperature. Examples of polyolefins to form the hard segment include, for example, polyethylene, polypropylene, isotactic polypropylene, and polybutene.

The thermoplastic polyolefin-based elastomer is also sometimes simply referred to as ThermoPlastic Olefin elastomer ("TPO").

The thermoplastic polyolefin-based elastomer is not particularly limited, and examples include copolymers including a polyolefin constituting a hard segment that is crystalline and has a high melting temperature, and including a polymer constituting the soft segment that is amorphous and has a low glass transition temperature.

Examples of the polyolefin-based thermoplastic elastomer include an olefin - $\alpha$-olefin random copolymer and an olefin block copolymer, such as a propylene block copolymer, a copolymer of ethylene and propylene, a copolymer of propylene and 1-hexene, a copolymer of propylene and 4-methyl-1-pentene, a copolymer of propylene and 1-butene, a copolymer of ethylene and 1-hexene, a copolymer of ethylene and 4-methyl-pentene, a copolymer of ethylene and 1-butene, a copolymer of 1-butene and 1-hexene, a copolymer of 1-butene and 4-methyl-pentene, a copolymer of ethylene and methacrylic acid, a copolymer of ethylene and methyl methacrylate, a copolymer of ethylene and ethyl methacrylate, a copolymer of ethylene and butyl methacrylate, a copolymer of ethylene and methyl acrylate, a copolymer of ethylene and ethyl acrylate, a copolymer of ethylene and butyl acrylate, a copolymer of propylene and methacrylic acid, a copolymer of propylene and methyl methacrylate, a copolymer of propylene and ethyl methacrylate, a copolymer of propylene and butyl methacrylate, a copolymer of propylene and methyl acrylate, a copolymer of propylene and ethyl acrylate, a copolymer of propylene and butyl acrylate, a copolymer of ethylene and vinyl acetate, and a copolymer of propylene and vinyl acetate.

The polyolefin-based thermoplastic elastomer is preferably a propylene block copolymer, a copolymer of ethylene and propylene, a copolymer of propylene and 1-hexene, a copolymer of propylene and 4-methyl-1-pentene, a copolymer of propylene and 1-butene, a copolymer of ethylene and 1-hexene, a copolymer of ethylene and 4-methyl-pentene, a copolymer of ethylene and 1-butene, a copolymer of ethylene and methacrylic acid, a copolymer of ethylene and methyl methacrylate, a copolymer of ethylene and ethyl methacrylate, a copolymer of ethylene and butyl methacrylate, a copolymer of ethylene and methyl acrylate, a copolymer of ethylene and ethyl acrylate, a copolymer of ethylene and butyl acrylate, a copolymer of propylene and methacrylic acid, a copolymer of propylene and methyl methacrylate, a copolymer of propylene and ethyl methacrylate, a copolymer of propylene and butyl methacrylate, a copolymer of propylene and methyl acrylate, a copolymer of propylene and ethyl acrylate, a copolymer of propylene and butyl acrylate, a copolymer of ethylene and vinyl acetate, or a copolymer of propylene and vinyl acetate, and more preferably a copolymer

of ethylene and propylene, a copolymer of propylene and 1-butene, a copolymer of ethylene and 1-butene, a copolymer of ethylene and methyl methacrylate, a copolymer of ethylene and methyl acrylate, a copolymer of ethylene and ethyl acrylate, or a copolymer of ethylene and butyl acrylate.

Two or more polyolefin resins, such as ethylene and propylene, may be used in combination. The content of polyolefin in the polyolefin-based thermoplastic elastomer is preferably from 50% by mass to 100% by mass.

The number average molecular weight of the polyolefin-based thermoplastic elastomer is preferably from 5,000 to 10,000,000. When the number average molecular weight of the polyolefin-based thermoplastic elastomer is in the range of 5,000 to 10,000,000, the resin material has sufficient mechanical properties, and excellent processability. From similar viewpoints, the number average molecular weight is more preferably from 7,000 to 1,000,000, and particularly preferably from 10,000 to 1,000,000. Within these ranges, the mechanical properties and processability of the resin material can further be improved. Further, the number average molecular weight of the polymer constituting the soft segment is preferably from 200 to 6,000 from the viewpoint of toughness and low-temperature flexibility. Further, the mass ratio (x:y) of the hard segment (x) to the soft segment (y) is preferably from 50:50 to 95:15, and more preferably from 50:50 to 90:10, from the viewpoint of moldability.

The polyolefin-based thermoplastic elastomer can be synthesized by copolymerization of a polymer for forming the hard segment described above and a polymer for forming the soft segment described above using known methods.

Acid-modified Thermoplastic Polyolefin-based Elastomer

An "acid-modified thermoplastic polyolefin-based elastomer" means a thermoplastic polyolefin-based elastomer that is acid modified by causing an unsaturated compound having an acid group such as a carboxylic acid group, a sulfuric acid group, or a phosphoric acid group to bond with an unmodified thermoplastic polyolefin-based elastomer. The acid-modified thermoplastic polyolefin-based elastomer may be obtained by, for example, causing an unsaturated bond site of an unsaturated carboxylic acid, or an unsaturated carboxylic acid anhydride, to bond (for example, by graft polymerization) with a thermoplastic polyolefin-based elastomer.

From the viewpoint of suppressing degradation of the thermoplastic elastomer, the (unsaturated) compound having an acid group is preferably a compound having a carboxylic acid group that is a weak acid group, and examples that may be employed therefor include acrylic acid, methacrylic acid, itaconic acid, crotonic acid, isocrotonic acid, and maleic acid.

Examples of polyolefin-based thermoplastic elastomers that can be used include commercial products such as: TAFMER series (for example, A0550S, A1050S, A4050S, A1070S, A4070S, A35070S, A1085S, A4085S, A7090, A70090, MH7007, MH7010, XM-7070, XM-7080, BL4000, BL2481,BL3110, BL3450, P-0275, P-0375, P-0775, P-0180, P-0280, P-0480, and P-0680) manufactured by Mitsui Chemicals, Inc.; NUCREL series (for example, AN4214C, AN4225C, AN42115C, N0903HC, N0908C, AN42012C, N410, N1050H, N1108C, N1110H, N1207C, N1214, AN4221C, N1525, N1560, N0200H, AN4228C, AN4213C, and N035C) and ELVALOYAC series (for example, 1125AC, 1209AC, 1218AC, 1609AC, 1820AC, 1913AC, 2112AC, 2116AC, 2615AC, 2715AC, 3117AC, 3427AC, 3717AC) manufactured by DU PONT-MITSUI POLY CHEMICALS CO., LTD.; ACRYFT series and EVATATE series manufactured by Sumitomo Chemical Co., Ltd.; ULTRASON series manufactured by Tosoh Corporation; etc.

Further examples of polyolefin-based thermoplastic elastomer that can be used include commercial available products PRIME TPO series (for example, E-2900 H, F-3900 H, E-2900, F-3900, J-5900, E-2910, F-3910, J-5910, E-2710, F-3710, J-5910, E-2740, F-3740, R110 MP, R110E, T310E, M142E, etc) manufactured by Prime Polymer Co., Ltd., etc.

Thermoplastic Polystyrene-based Elastomer

Examples of the thermoplastic polystyrene-based elastomer include materials with at least polystyrene constituting the hard segment, and with another polymer (for example polybutadiene, polyisoprene, polyethylene, hydrogenated polybutadiene, hydrogenated polyisoprene, or the like) constituting the soft segment with a low glass transition temperature. Synthetic rubbers, such as vulcanized SBR resins or the like, may be used as the thermoplastic polystyrene-based elastomer.

Thermoplastic polystyrene-based elastomers are sometimes referred to as ThermoPlastic Styrene elastomers ("TPS").

Either an acid-modified thermoplastic polystyrene-based elastomer modified with an acid group, or an unmodified thermoplastic polystyrene-based elastomer may be employed as the thermoplastic polystyrene-based elastomer.

Examples of polystyrenes that may be suitably employed for forming the hard segment include, for example, those obtained using known radical polymerization methods, or those obtained using known ionic polymerization methods, for example a polystyrene having an anionic living polymer form. Examples of polymers for forming the soft segment include, for example, polybutadiene, polyisoprene, poly(2,3-dimethyl-butadiene), and the like. The acid-modified thermoplastic polystyrene-based elastomer may be obtained by acid-modifying an unmodified thermoplastic polystyrene-based elastomer, as described below.

Examples of the combination of the hard segment and the soft segment described above include any combination of any of the hard segments described above and any of the soft segments described above. Among these, a combination of polystyrene with polybutadiene, and a combination of polystyrene with polyisoprene are preferable. Further, in order to suppress undesired crosslinking reaction of the thermoplastic elastomer, the soft segment is preferably a hydrogenated soft segment.

The number average molecular weight of the polymer constituting the hard segment (polystyrene) is preferably from 5,000 to 500,000, and more preferably from 10,000 to 200,000.

Furthermore, the number average molecular weight of the polymer constituting the soft segment is preferably from 5,000 to 1,000,000, more preferably from 10,000 to 800,000, and particularly preferably from 30,000 to 500,000. In addition, the mass ratio (x:y) of the hard segment (x) to the soft segment (y) is preferably from 5:95 to 80:20, and more preferably from 10:90 to 70:30, from the viewpoint of moldability.

The polystyrene-based thermoplastic elastomer can be synthesized by copolymerizing a polymer for forming the hard segment and a polymer for forming the soft segment according to known methods.

Examples of the polystyrene-based thermoplastic elastomer include a styrene-butadiene-based copolymer [SBS (polystyrene-poly(butylene) block-polystyrene), a SEBS (polystyrene-poly(ethylene/butylene) block-polystyrene)], a styrene-isoprene copolymer [polystyrene-polyisoprene block-polystyrene), a styrene-propylene-based copolymer [SEP (polystyrene-(ethylene/propylene) block), a SEPS (polystyrene-poly(ethylene/propylene) block-polystyrene), an SEEPS (polystyrene-poly(ethylene-ethylene/propylene) block-polystyrene)), and an SEB (polystyrene (ethylene/butylene) block). The SEBS is particularly preferable.

Examples of the non-modified polystyrene-based thermoplastic elastomer include commercial products such as TAFTEC series (for example, H1031, H1041, H1043, H1051, H1052, H1053, H1062, H1082, H1141, H1221, and H1272) manufactured by Asahi Kasei Corporation; and SEBS (HYBRAR 5127, 5125, etc.) and SEPS (SEPTON 2002, 2063, S2004, S2006, etc.) manufactured by Kuraray.

Acid-modified Thermoplastic Polystyrene-based Elastomer

"Acid-modified thermoplastic polystyrene-based elastomer" refers to a thermoplastic polystyrene-based elastomer that is acid modified by causing an unsaturated compound having an acid group such as a carboxylic acid group, a sulfuric acid group, or a phosphoric acid group to bond with an unmodified thermoplastic polystyrene-based elastomer. The acid-modified thermoplastic polystyrene-based elastomer may be obtained by, for example, causing an unsaturated bond site of an unsaturated carboxylic acid, or an unsaturated carboxylic acid anhydride, to bond (for example, by graft polymerization) with a thermoplastic polystyrene-based elastomer.

From the viewpoint of suppressing degradation of the thermoplastic elastomer, the (unsaturated) compound having an acid group is preferably a compound having a carboxylic acid group that is a weak acid group, and examples that may be employed therefor include acrylic acid, methacrylic acid, itaconic acid, crotonic acid, isocrotonic acid, and maleic acid.

Examples of the acid-modified thermoplastic polystyrene-based elastomer include, for example, TUFTEC such as M1943, M1911, or M1913, manufactured by Asahi Kasei Corporation, and FG19181G, manufactured by Kraton Inc.

The acid value of the acid-modified thermoplastic polystyrene-based elastomer is preferably more than 0 mg ($CH_3ONa$)/g and 20 mg ($CH_3ONa$)/g or less, more preferably more than 0 mg ($CH_3ONa$)/g and 17 mg ($CH_3ONa$)/g or less, and particularly preferably more than 0 mg ($CH_3ONa$)/g and 15 mg ($CH_3O$)Na)/g or less.

Thermoplastic Polyamide-based Elastomer

In the invention, "thermoplastic polyamide-based elastomer" refers to a thermoplastic resin material that is formed of a copolymer having a polymer constituting a hard segment that is crystalline and has a high melting temperature, and a polymer constituting a soft segment that is amorphous and has a low glass transition temperature, wherein the polymer constituting the hard segment has amide bonds (-CONH-) in the main chain thereof.

The thermoplastic polyamide-based elastomer is also sometimes simply referred to as ThermoPlastic Amide elastomer ("TPA").

The polyamide-based thermoplastic elastomer may be a material in which at least a polyamide constitutes a crystalline hard segment having a high melting temperature and another polymer (for example, a polyester or a polyether) constitutes a non-crystalline soft material having a low glass transition temperature. Further, in the polyamide-based thermoplastic elastomer, a chain extending agent such as a dicarboxylic acid may be used in addition to the hard segment and the soft segment. Examples of the polyamide for forming the hard segment include a polyamide produced using a monomer represented by the following Formula (1) or Formula (2).

Formula (1) $H_2N-R^1-COOH$

In Formula (1), R1 represents a hydrocarbon molecular chain having a carbon number of from 2 to 20 or an alkylene group having a carbon number of from 2 to 20.

Formula (2)

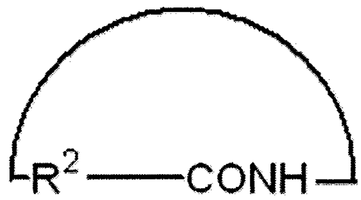

In Formula (2), R2 represents a hydrocarbon molecular chain having a carbon number of from 3 to 20 or an alkylene group having a carbon number of from 3 to 20.

In Formula (1), R1 is preferably a hydrocarbon molecular chain having a carbon number of from 3 to 18 or an alkylene group having a carbon number of from 3 to 18, more preferably a hydrocarbon molecular chain having a carbon number of from 4 to 15 or an alkylene group having a carbon number of from 4 to 15, and particularly preferably a hydrocarbon molecular chain having a carbon number of from 10 to 15 or an alkylene group having a carbon number of from 10 to 15. Further, in Formula (2), R2 is preferably a hydrocarbon molecular chain having a carbon number of from 3 to 18 or an alkylene group having a carbon number of from 3 to 18, more preferably a hydrocarbon molecular chain having a carbon number of from 4 to 15 or an alkylene group having a carbon number of from 4 to 15, and particularly preferably a hydrocarbon molecular chain having a carbon number of from 10 to 15 or an alkylene group having a carbon number of from 10 to 15.

Examples of the monomer represented by Formula (1) or (2) include an ω-aminocarboxylic acid and a lactam. Further, examples of the polyamide that forms the hard segment include a polycondensate of a ω-aminocarboxylic acid or a lactam, and a copolycondensate of a diamine and a dicarboxylic acid.

Examples of the ω-aminocarboxylic acid include aliphatic ω-aminocarboxylic acids having a carbon number of from 5 to 20, such as 6-aminocaproic acid, 7-aminoheptanoic acid, 8-aminooctanoic acid, 10-aminocapric acid, 11-aminoundecanoic acid, and 12-aminododecanoic acid. Further, examples of the lactam include aliphatic lactams having a carbon number of from 5 to 20, such as lauryllactam, ε-caprolactam, undecanolactam, ω-enantholactam, and 2-pyrrolidone.

Examples of the diamine include diamine compounds, for example, aliphatic diamines having a carbon number of from 2 to 20, such as ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and methaxylenediamine. Further, the dicarboxylic acid may be represented by HOOC-(R3)m-COOH (R3: a hydrocarbon molecular chain having a carbon number of from 3 to 20, m: 0 or 1), and examples thereof include aliphatic dicarboxylic acids having a carbon number of from 2 to 20, such as oxalic acid, succinic acid, glutaric acid, adipic acid, pimelic acid, suberic acid, azelaic acid, sebacic acid, and dodecanedioic acid.

A polyamide obtained by ring-opening polycondensation of lauryllactam, ε-caprolactam, or undecanolactam can preferably be used as the polyamide that forms the hard segment.

The polymer that forms the soft segment may be, for example, a polyester or a polyether, and examples thereof include polyethylene glycol, polypropylene glycol, polytetramethylene ether glycol, and an ABA-type triblock polyether. These may be used singly or in combination of two or more kinds thereof. A polyether diamine obtained by allowing terminals of a polyether with ammonia or the like, for example, may also be used.

Here, the "ABA-type triblock polyether" means a polyether represented by the following Formula (3).

Formula (3)

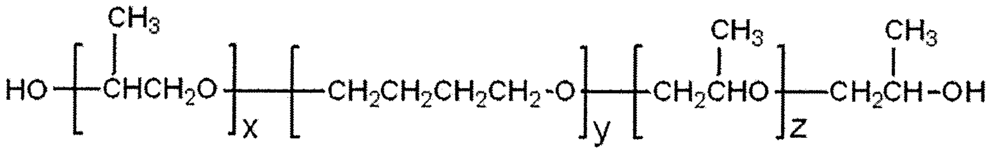

In Formula (3), x and z each independently represent an integer of 1 to 20. y represents an integer of 4 to 50.

In Formula (3), x and z are each preferably an integer of 1 to 18, more preferably an integer of 1 to 16, particularly preferably an integer of 1 to 14, and most preferably an integer of 1 to 12. Further, in Formula (3), y is each preferably an integer of 5 to 45, more preferably an integer of 6 to 40, particularly preferably an integer of 7 to 35, and most preferably an integer of 8 to 30.

Examples of the combination of the hard segment and the soft segment include any combination of any of the hard segments described above and any of the soft segments described above. Among these, a combination of a ring-opening polycondensate of lauryllactam with polyethylene glycol, a combination of a ring-opening polycondensate of lauryllactam with polypropylene glycol, a combination of a ring-opening polycondensate of lauryllactam with polytetramethylene ether glycol, and a combination of a ring-opening polycondensate of lauryllactam with an ABA-type triblock polyether are preferable, and a combination of a ring-opening polycondensate of lauryllactam with an ABA-type triblock polyether is particularly preferable.

The number average molecular weight of the polymer constituting the hard segment (polyamide) is preferably from 300 to 30,000, from the viewpoint of melt moldability. Further, the number average molecular weight of the polymer constituting the soft segment is preferably from 200 to 20,000, from the viewpoints of toughness and low-temperature flexibility. Further, the mass ratio (x:y) of the hard segment (x) to the soft segment (y) is preferably from 50:50 to 90:10, and more preferably from 50:50 to 80:20, from the viewpoint of melt moldability.

The polyamide-based thermoplastic elastomer can be synthesized by copolymerizing a polymer that forms the hard segment and a polymer that forms the soft segment, using known methods.

Commercially available products such as UBESTA XPA series (for example, XPA9063X1, XPA9055X1, XPA9048X2, XPA9048X1, XPA9040X1, XPA9040X2 and XPA9044) from Ube Industries, Ltd. and VESTAMID series (for example, E40-S3, E47-S1, E47-S3, E55-S1, E55-S3, EX9200, and E50-R2) from Daicel-Evonik Ltd. can be used as the polyamide-based thermoplastic elastomer.

- Polyurethane-Based Thermoplastic Elastomer -

The polyurethane-based thermoplastic elastomer may be, for example, a material in which at least a polyurethane constitutes a hard segment forming a pseudo-crosslinking by physical aggregation, and in which another polymer constitutes a non-crystalline soft segment having a low glass transition temperature. The polyurethane-based thermoplastic elastomer may be simply referred as TPU (Thermo Plastic Urethane elastomer) in some cases.
the polyurethane-based thermoplastic elastomer may be represented as a copolymer including, for example, a soft segment containing a unit structure represented by the following Structural unit (U-1) and a hard segment containing a unit structure represented by the following Structural unit (U-2).

Structural unit (U-1): 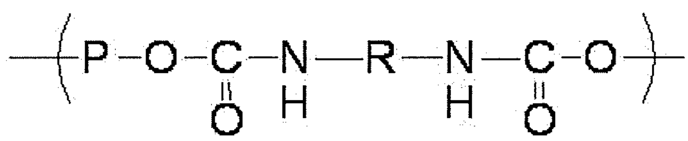

Structural unit (U-2): 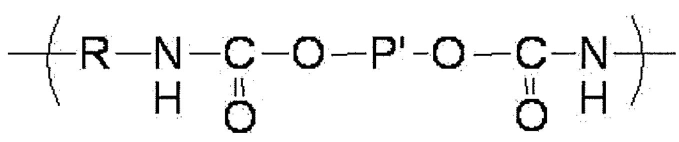

In the structural unit (U-1) and the structural unit (U-2), P represents a long-chain aliphatic polyether or a long-chain aliphatic polyester; R represents an aliphatic hydrocarbon, an alicyclic hydrocarbon, or an aromatic hydrocarbon; P' represents a short-chain aliphatic hydrocarbon, an alicyclic hydrocarbon, or an aromatic hydrocarbon.

Examples of the long-chain aliphatic polyether represented by P and the long-chain aliphatic polyester represented by P in the structural unit (U-1) that can be used include those having molecular weights of 500 to 5000. P is derived from a diol compound containing the long-chain aliphatic polyether or long-chain aliphatic polyester represented

by P. Examples of the diol compound include polyethylene glycol, polypropylene glycol, polytetramethylene ether glycol, poly(butylene adipate) diol, poly-ε-caprolactone diol, poly(hexamethylene carbonate) diol, and the ABA-type triblock polyether (polyether represented by the Formula (3)), each of which has a molecular weight within the above range.

These may be used singly, or in combination of two or more thereof.

In the structural unit (U-1) and the structural unit (U-2), R is derived from a diisocyanate compound containing the aliphatic hydrocarbon, alicyclic hydrocarbon, or aromatic hydrocarbon represented by R. Examples of an aliphatic diisocyanate compound containing an aliphatic hydrocarbon represented by R include 1,2-ethylene diisocyanate, 1,3-propylene diisocyanate, 1,4-butane diisocyanate, and 1,6-hexamethylene diisocyanate.

Furthermore, examples of a diisocyanate compound containing an alicyclic hydrocarbon represented by R include 1,4-cyclohexane diisocyanate and 4,4-cyclohexane diisocyanate. Further, examples of an aromatic diisocyanate compound containing an aromatic hydrocarbon represented by R include 4,4'-diphenylmethane diisocyanate and tolylene diisocyanate.

These may be used singly, or in combination of two or more thereof.

Examples of the short-chain aliphatic hydrocarbon, alicyclic hydrocarbon, or aromatic hydrocarbon represented by P' in the structural unit (U-2) include those having molecular weights of less than 500. Further, P' is derived from a diol compound containing the short-chain aliphatic hydrocarbon, alicyclic hydrocarbon, or aromatic hydrocarbon represented by P'. Examples of an aliphatic diol compound containing the short-chain aliphatic hydrocarbon represented by P' include glycols and polyalkylene glycols, such as ethylene glycol, propylene glycol, trimethylene glycol, 1,4-butanediol, 1,3-butanediol, 1,5-pentanediol, 1,6-hexanediol, 1,7-heptanediol, 1,8-octanediol, 1,9-nonanediol and 1,10-decanediol.

Examples of an alicyclic diol compound containing the alicyclic hydrocarbon represented by P' include cyclopentane-1,2-diol, cyclohexane-1,2-diol, cyclohexane-1,3-diol, cyclohexane-1,4-diol, and cyclohexane-1,4-dimethanol.

Further, examples of an aromatic diol compound containing the aromatic hydrocarbon represented by P' include hydroquinone, resorcin, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenylsulfide, 4,4'-dihydroxydiphenylsulfone, 4,4'-dihydroxybenzophenone, 4,4'-dihydroxydiphenylmethane, bisphenolA,1,1-di(4-hydroxyphenyl)cyclohexane, 1,2-bis(4-hydroxyphenoxy)ethane, 1,4-dihydroxynaphthalene, 2,6-dihydroxynaphthalene, etc.

These may be used singly, or in combination of two or more thereof.

The number average molecular weight of the polymer constituting the hard segment (polyamide) is preferably from 300 to 1,500, from the viewpoint of melt moldability. Further, the number average molecular weight of the polymer constituting the soft segment is preferably from 500 to 20,000, more preferably from 500 to 5,000, and particularly preferably from 500 to 3,000, from the viewpoints of flexibility and thermal stability of the polyurethane-based thermoplastic elastomer. Further, the mass ratio (x:y) of the hard segment (x) to the soft segment (y) is preferably from 15:85 to 90:10, and more preferably from 30:70 to 90:10, from the viewpoint of moldability.

The thermoplastic polyurethane-based elastomer may be synthesized by a known method to copolymerize a polymer forming the hard segment, and a polymer forming the soft segment described above. The thermoplastic polyurethane described in JP-A H05-331256, for example, may be employed as the thermoplastic polyurethane-based elastomer.

Specifically, the thermoplastic polyurethane-based elastomer is preferably a combination of a hard segment consisting of an aromatic diol, and an aromatic diisocyanate, and a soft segment consisting of a polycarbonate ester, with a tolylene diisocyanate (TDI)/polyester-based polyol copolymer, a TDI/polyether-based polyol copolymer, a TDI/caprolactone-based polyol copolymer, a TDI/polycarbonate-based polyol copolymer, a 4,4'-diphenylmethane diisocyanate (MDI)/polyester-based polyol copolymer, an MDI/polyether-based polyol copolymer, an MDI/caprolactone-based polyol copolymer, an MDI/polycarbonate-based polyol copolymer, or an MDI + hydroquinone/polyhexamethylene carbonate copolymer being preferable, and a TDI/polyester-based polyol copolymer, a TDI/polyether-based polyol copolymer, an MDI/polyester polyol copolymer, an MDI/polyether-based polyol copolymer, or an MDI + hydroquinone /polyhexamethylene carbonate copolymer being more preferable.

Furthermore, examples of the polyurethane-based thermoplastic elastomer that can be used include commercial products such as ELASTRAN series (for example, ET680, ET880, ET690, ET890, etc.) manufactured by BASF Co., Ltd., KURAMIRON U series (for example, 2000 numbers, 3000 numbers, 8000 numbers, and 9000 numbers) manufactured by Kuraray Co., Ltd., MIRACTRAN series (for example, XN-2001, XN-2004, P390RSUP, P480RSUI, P26MRNAT, E490, E590, and P890) manufactured by Nippon Miractran Co., Ltd..

- Polyester-Based Thermoplastic Elastomer -

The polyester-based thermoplastic elastomer may be, for example, a material in which at least polyester constitutes the hard segment, and in which another polymer (for example, polyester, polyether, or the like) constitutes the

non-crystalline soft segment having a low glass transition temperature.

The polyester-based thermoplastic elastomer may be simply referred as TPC (Thermo Plastic polyester elastomer) in some cases.

The polyester for forming the hard segment to be used may be an aromatic polyester. The aromatic polyester can be formed from, for example, an aromatic dicarboxylic acid or ester-forming derivative thereof and an aliphatic diol. The aromatic polyester is preferably a polybutylene terephthalate derived from terephthalic acid and/or dimethyl terephthalate and 1,4-butanediol. Further, the aromatic polyester may be a polyester derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof, and a diol having a molecular weight of 300 or less. Examples of the diol having a molecular weight of 300 or less include: aliphatic diols such as ethylene glycol, trimethylene glycol, pentamethylene glycol, hexamethylene glycol, neopentyl glycol, and decamethylene glycol; alicyclic diols such as 1,4-cyclohexanedimethanol and tricyclodecanedimethylol; and aromatic diols such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, and 4,4'-dihydroxy-p-quarterphenyl. The aromatic polyester may alternatively be a copolymerization polyester formed using two or more of these dicarboxylic acid components and/or two or more of these diol components. Further, polyfunctional carboxylic acid components, polyfunctional oxyacid components, polyfunctional hydroxy components, etc, each of which is tri- or higher-functional, may be copolymerized in an amount in the range of 5% by mol or less.

Examples of the polyester for forming the hard segment include polyethylene terephthalate, polybutylene terephthalate, polymethylene terephthalate, polyethylene naphthalate, and polybutylene naphthalate. Polybutylene terephthalate is preferable.

Furthermore, examples of the polymer for forming the soft segment include aliphatic polyesters and aliphatic polyethers.

Examples of aliphatic polyethers include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide adduct polymer of poly(propylene oxide) glycol, and a copolymer of ethylene oxide and tetrahydrofuran.

Examples of aliphatic polyesters include poly($\varepsilon$-caprolactone), polyenantholactone, polycaprylolactone, polybutylene adipate, and polyethylene adipate.

Among these aliphatic polyethers and aliphatic polyesters, poly(tetramethylene oxide) glycol, an ethylene oxide adduct of poly(propylene oxide) glycol, poly($\varepsilon$-caprolactone), polybutylene adipate, polyethylene adipate, etc. are preferable from the viewpoint of the elastic characteristics of the resultant polyester block copolymer.

Further, the number average molecular weight of the polymer for forming the soft segment is preferably from 300 to 6,000 from the viewpoint of toughness and low-temperature flexibility. The volume ratio (x:y) of the hard segment (x) to the soft segment (y) is preferably from 99:1 to 20:80, and more preferably from 98:2 to 30:70, from the viewpoint of moldability.

Examples of the above combination of hard segment and soft segment may include respective combinations of the hard segments and the soft segments described above. Of these, a combination in which the hard segment is polybutylene terephthalate, and the soft segment is an aliphatic polyether, is preferable, and a combination in which the hard segment is polybutylene terephthalate, and the soft segment is poly(ethylene oxide)glycol is more preferable.

Commercially available products may be used as the polyester-based thermoplastic elastomer. For example, HYTREL series (for example, 3046, 5557, 6347, 4047, 4767) manufactured by DU PONT-TORAY CO., LTD., PELPRENE series (for example, P30B, P40B, P40H, P55B, P70B, P150B, P250B, E450B, P150 M, S1001, S2001, S5001, S6001, S9001) manufactured by TOYOBO CO., LTD., etc., may be used.

The above thermoplastic elastomers may be synthesized by a known method to copolymerize a polymer forming the hard segment, and a polymer forming the soft segment.

Explanation follows regarding various non-elastomer thermoplastic resins.

Non-elastomer Thermoplastic Polyolefin-based Resin

A non-elastomer polyolefin-based resin is a polyolefin-based resin with a higher elastic modulus than the thermoplastic polyolefin-based elastomers described above.

Examples of the non-elastomer thermoplastic polyolefin-based resin include homopolymers, random copolymers, and block copolymers of $\alpha$-olefins such as propylene, or ethylene, and of annular olefins such as cycloolefins. Specific examples thereof include thermoplastic polyethylene-based resins, thermoplastic polypropylene-based resins, and thermoplastic polybutadiene-based resins, with thermoplastic polypropylene-based resins in particular being preferable from the viewpoints of heat resistance, and workability.

Specific examples of the non-elastomer thermoplastic polypropylene-based resin include propylene homopolymers, propylene-$\alpha$-olefin random copolymers, and propylene-$\alpha$-olefin block copolymers. Examples of such $\alpha$-olefins

include α-olefins having a carbon number of approximately from 3 to 20, such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene, and 1-eicosene.

Note that the non-elastomer thermoplastic polyolefin-based resin may be a chlorinated polyolefin-based resin in which some or all of the hydrogen atoms in the molecule are substituted by chlorine atoms. Examples of the chlorinated polyolefin-based resin include chlorinated polyethylene-based resins.

Non-elastomer Thermoplastic Polystyrene-based Resin

The non-elastomer thermoplastic polystyrene-based resin is a thermoplastic polystyrene-based resin with a higher elastic modulus than the thermoplastic polystyrene-based elastomers described above.

A product obtained by, for example, a known radical polymerization method or ionic polymerization method is preferably used as the non-elastomer thermoplastic polystyrene-based resin, with examples thereof including polystyrene having an anionic living polymer form. Moreover, examples of the thermoplastic polystyrene-based resin include polymers including styrene molecular skeletons, and copolymers of styrene and acrylonitrile.

Of these, acrylonitrile/butadiene/styrene copolymers, hydrogenated products thereof, blends of acrylonitrile/styrene copolymers and polybutadiene, and hydrogenated products thereof are preferable. Specific examples of the thermoplastic polystyrene-based resin include polystyrenes (known as PS resins), acrylonitrile/styrene resins (known as AS resins), acrylic-styrene-acrylonitrile resins (known as ASA resins), acrylonitrile/butadiene/styrene resins (known as ABS resins (including blended-forms and copolymer-forms)), hydrogenated products of ABS resins (known as AES resins), and acrylonitrile-chlorinated polyethylene-styrene copolymers (known as ACS resins).

As stated above, AS resins are acrylonitrile/styrene resins, and are copolymers with styrene and acrylonitrile as the main components, and these may be further copolymerized with, for example, aromatic vinyl compounds such as α-methylstyrene, vinyltoluene, or divinylbenzene, cyanated vinyl compounds such as methacrylonitrile, alkylesters of (meth)acrylic acid such as methyl methacrylate, ethyl methacrylate, n-butyl methacrylate, methyl acrylate, ethyl acrylate, n-butyl acrylate, or stearyl acrylate, maleimide-based monomers such as maleimide, N-methylmaleimide, N-ethylmaleimide, N-phenylmaleimide, or N-cyclohexylmaleimide, diene compounds, dialkylesters of maleic acid, allyl alkyl ethers, unsaturated amino compounds, and vinyl alkyl ethers.

Moreover, for the AS resin, products of further graft polymerizing, or copolymerizing the AS resin with an unsaturated monocarboxylic acid, an unsaturated dicarboxylic acid, an unsaturated acid anhydride, or a vinyl-based monomer having an epoxy group are preferable, and products of further graft polymerizing, or copolymerizing the AS resin with an unsaturated acid anhydride, or a vinyl-based monomer having an epoxy group are more preferable.

Such vinyl-based monomers having an epoxy group are compounds having both a radically polymerizable vinyl group and an epoxy group in a molecule thereof. Specific examples thereof include glycidyl esters of unsaturated organic acids such as glycidyl acrylate, glycidyl methacrylate, glycidyl ethacrylate, or glycidyl itaconate, glycidyl ethers such as allyl glycidyl ether, and derivatives of these such as 2-methyl glycidyl methacrylate. Of these, glycidyl acrylate, and glycidyl methacrylate may be preferably employed. Moreover, these compounds may be employed singly, or in a combination of two or more thereof.

Moreover, unsaturated acid anhydrides are compounds having both a radically polymerizable vinyl group and an acid anhydride in a molecule thereof. Preferable specific examples thereof include maleic acid anhydride.

ASA resins are substances configured by acrylate monomers, styrene monomers, and acrylonitrile monomers, and that have rubbery properties and thermoplasticity.

Examples of the ABS resin include resins produced by graft polymerizing an olefin-based rubber (such as polybutadiene rubber) to an acrylonitrile-styrene-based resin at approximately 40% by mass or less. Moreover, examples of the AES resin include resins produced by graft polymerizing an ethylene-propylene copolymer rubber (such as EP rubber) to an acrylonitrile-styrene-based resin at approximately 40% by mass or less.

Non-elastomer Thermoplastic Polyamide-based Resin

The non-elastomer polyamide-based resin is a polyamide-based resin with a higher elastic modulus than the thermoplastic polyamide-based elastomer described above.

Examples of the non-elastomer thermoplastic polyamide-based resin include polyamides that constitute the hard segment of the thermoplastic polyamide-based elastomers described above. Examples of the thermoplastic polyamide-based resin include polyamides (amide 6) that are ring-opened polycondensates of ε-caprolactam, polyamides (amide 11) that are ring-opened polycondensates of undecanolactam, polyamides (amide 12) that are ring-opened polycondensates of lauryl lactam, polyamides (amide 66) that are condensates of a diamine and a dibasic acid, and polyamides (amide MX) having meta-xylene diamine as a structural unit.

The amide 6 may be represented by, for example, $\{CO-(CH_2)_5-NH\}_n$ (where n represents the number of repeating

units).

The amide 11 may be represented by, for example, $\{CO-(CH_2)_{10}-NH\}_n$ (where n represents the number of repeating units).

The amide 12 may be represented by, for example, $\{CO-(CH_2)_{11}-NH\}_n$ (where n represents the number of repeating units).

The amide 66 may be represented by, for example, $\{CO(CH_2)_4CONH(CH_2)_6NH\}_n$ (where n represents the number of repeating units).

Moreover, the amide MX having meta-xylene diamine as a structural unit may be represented by, for example, the structural unit (A-1) below (where n in (A-1) represents the number of repeating units).

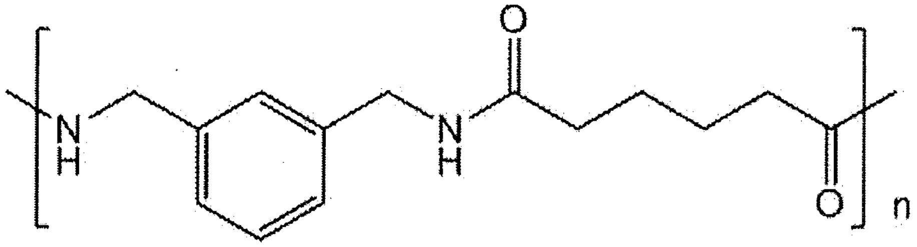

(A-1)

The non-elastomer thermoplastic polyamide-based resin may be a homopolymer configured by only the structural unit, or may be a copolymer of the structural unit (A-1) and another monomer. In the case of a copolymer, the content ratio of the structural unit (A-1) in each thermoplastic polyamide-based resin is preferably 60% by mass or above.

The number average molecular weight of the non-elastomer thermoplastic polyamide-based resin is preferably from 300 to 30000. Moreover, from the viewpoint of toughness and flexibility at low temperature, the number average molecular weight of the polymer constituting the soft segment is preferably from 200 to 20000.

A commercial product may be employed as the non-elastomer polyamide-based resin.

As the amide 6, for example, a commercial product such as "UBE Nylon" 1022B or 1011FB, manufactured by Ube Industries, Ltd., may be used.

As the amide 12, "UBE Nylon" 3024U, manufactured by Ube Industries, Ltd., may for example be used. As the amide 66, "UBE Nylon" 2020B, may for example be used. Moreover, as the amide MX, for example, a commercial product, such as MX Nylon (S6001, S6021, or S6011), manufactured by Mitsubishi Gas Chemical Company, Inc., may be used.

Non-elastomer Thermoplastic Polyester-based Resin

The non-elastomer polyester-based resin is a resin, having ester bonds in the main chain thereof, with a higher elastic modulus than the thermoplastic polyester-based elastomers described above.

Although the non-elastomer thermoplastic polyester-based resin is not particularly limited, it is preferably the same type of resin as the thermoplastic polyester-based resin included in the hard segment in the thermoplastic polyester-based elastomers described above. Moreover, the non-elastomer polyester-based resin may be crystalline, or amorphous, and examples thereof include aliphatic-type polyesters, and aromatic polyesters. The aliphatic-type polyester may be a saturated aliphatic-based polyester, or an unsaturated aliphatic-type polyester.

Aromatic polyesters are generally crystalline, and may be formed by, for example, an aromatic dicarboxylic acid or an ester forming derivative thereof, and an aliphatic diol.

Examples of the aromatic polyester include polyethylene terephthalate, polybutylene terephthalate, polystyrene terephthalate, polyethylene naphthalate, and polybutylene naphthalate, with polybutylene terephthalate being preferable.

An example of the aromatic polyester is polybutylene terephthalate derived from terephthalic acid and/or dimethyl terephthalate, and 1,4-butanediol. Moreover, the aromatic polyester may be a polyester derived from a dicarboxylic acid component such as isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, or 5-sulfoisophthalic acid, or an ester-forming derivative thereof, and a diol with a molecular weight of 300 or less, for example: an aliphatic diol such as ethylene glycol, trimethylene glycol, pentamethylene glycol, hexamethylene glycol, neopentyl glycol, or decamethylene glycol; an alicyclic diol such as 1,4-cyclohexane dimethanol, or tricyclodecane dimethylol; or an aromatic diol such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-p-terphenyl, or 4,4'-dihydroxy-p-quaterphenyl. Moreover, the aromatic polyester may be a copolymer polyester that employs two or more of the above dicarboxylic acid components and diol components in combination. Copolymerization can also be made with a polyfunctional carboxylic acid component, a polyfunctional oxyacid component, a polyfunctional hydroxy component, or the like,

having three or more functional groups, in a range of 5% by mol or less.

As such a non-elastomer thermoplastic polyester-based resin, a commercial product may be used, with examples including the "DURANEX" series (examples including 2000, and 2002), manufactured by Polyplastics Co., Ltd., the NOVADURAN series (examples include 5010R5, and 5010R3-2), manufactured by Mitsubishi Engineering-Plastics Corporation, and the "TORAYCON" series (examples include 1401X06, and 1401X31), manufactured by Toray Industries, Inc.

The aliphatic polyester may employ any out of a dicarboxylic acid/diol condensate, or a hydroxycarboxylic acid condensate. Examples thereof include polylactic acid, polyhydroxy-3-butylbutyrate, polyhydroxy-3-hexylbutyrate, poly(ε-caprolactone), polyenantholactone, polycaprylolactone, polybutylene adipate, and polyethylene adipate. Note that polylactic acid is a typical example of a resin used as a biodegradable plastic, and a preferable polylactic acid form is described below.

Dynamically Crosslinking-type Thermoplastic Elastomer

A dynamically crosslinking-type thermoplastic elastomer may be used as the resin material.

Dynamically crosslinking-type thermoplastic elastomers are thermoplastic elastomers produced under conditions of mixing rubber with molten-state thermoplastic resin, and then adding a crosslinking agent and kneading to perform a crosslinking reaction of rubber components.

The dynamically crosslinking-type thermoplastic elastomer is also sometimes simply referred to below as ThermoPlastic Vulcanizates Elastomer ("TPV").

Examples of thermoplastic resins that can be used in the manufacture of the TPV include the thermoplastic resins described above (thermoplastic elastomers included).

Examples of rubber components that can be used in the manufacture of the TPV include diene-based rubbers, and hydrogenated products thereof (for example, NR, IR, epoxied natural rubbers, SBR, BR (high-cis BR, and low-cis BR), NBR, hydrogenated NBR, and hydrogenated SBR), olefin-based rubbers (for example, an ethylene propylene rubber (EPDM, EPM), a maleic acid-modified ethylene propylene rubber (M-EPM), IIR, a copolymer of isobutylene and an aromatic vinyl, or a diene-based monomer, acrylic rubber (ACM), or an ionomer), halogen-containing rubbers (for example, Br-IIR, Cl-IIR, a bromination product of an isobutylene para-methylstyrene copolymer (Br-IPMS), chloroprene rubber (CR), hydrin rubber (CHR), chlorosulfonated polyethylene (CSM), chlorinated polyethylene (CM), or maleic acid-modified chlorinated polyethylene (M-CM)), silicone rubbers (for example, methyl vinyl silicone rubber, dimethyl silicone rubber, or methyl phenyl vinyl silicone rubber), sulfur-containing rubbers (for example, a polysulfide rubber), fluorine rubbers (for example, vinylidene fluoride-based rubbers, fluorine-containing vinylether-based rubbers, tetrafluoroethylene-propylene-based rubbers, fluorine-containing silicone-based rubbers, and fluorine-containing phosphazene-based rubbers); in particular, halogen-containing copolymer rubbers of isomonoolefins and p-alkylstyrenes such as isobutylene-isoprene copolymer rubbers with introduced halogen groups, and/or isobutylene-paramethylstyrene copolymer rubbers with introduced halogen groups are effectively used as modified polyisobutylene-based rubber. "Exxpro", manufactured by ExxonMobil, may be suitably employed as the latter.

Thermosetting resin

Next, explanation will be given regarding the thermosetting resin.

Thermosetting resin refers to a polymer compound that forms a three-dimensional mesh structure, and hardens, with increasing temperature.

Examples of the thermosetting resin include phenolic resins, epoxy resins, melamine resins, and urea resins.

Specifically, examples include the following materials.

Phenolic Resin

The phenolic resin is preferably a monomer such as a monomethylol phenol, a dimethylol phenol, a trimethylol phenol, a mixture of these monomers, an oligomerization product of these monomers, or a mixture of monomers and oligomers, wherein the monomer is a product of allowing a reaction to occur under an acid or alkali catalyst between: a compound having a phenol structure such as resorcinol, a bisphenol or the like, a substituted phenol that includes one hydroxyl group such as phenol, cresol, xylenol, para-alkylphenol, para-phenylphenol, a substituted phenol that includes two hydroxyl groups such as catechol, resorcinol, or hydroquinone, a bisphenol such as bisphenol A, or bisphenol Z, or a biphenol; and aldehydes such as formaldehyde, paraformaldehyde, or the like. A curing agent such as an amine may also be employed.

Epoxy Resin

In general, monomers, oligomers, and polymers having two or more epoxy groups in a single molecule thereof are examples of the epoxy resin, and the molecular weight, and molecular structure thereof are not particularly limited. Examples thereof include biphenyl-type epoxy resins, bisphenol-type epoxy resins, stilbene-type epoxy resins, phenol novolak-type epoxy resins, cresol novolak-type epoxy resins, triphenol methane-type epoxy resins, alkyl-modified triphenol methane-type epoxy resins, triazine nucleus-containing epoxy resins, dicyclopentadiene modified phenol-type epoxy resins, phenol aralkyl-type epoxy resins (having a phenylene skeleton, a diphenylene skeleton, or the like), and these may be employed singly, or in a mixture thereof.

Of these, biphenyl-type epoxy resins, bisphenol-type epoxy resins, stilbene-type epoxy resins, phenol novolak-type epoxy resins, cresol novolak-type epoxy resins, and triphenol methane-type epoxy resins are preferable, with biphenyl-type epoxy resins, bisphenol-type epoxy resins, phenol novolak-type epoxy resins, cresol novolak-type epoxy resins being more preferable, and bisphenol-type epoxy resins being particularly preferable. A curing agent such as an amine may also be employed.

Melamine Resin

As the melamine resin, for example, an alkoxymethyl melamine resin may be employed. Specific examples of the alkoxy group include methylated melamine resin, ethylated melamine resin, n-butylated melamine resin, isobutylated melamine resins, employing a methoxy group, an ethoxy group, an n-butoxy group, an isobutoxy group, or the like.

The above melamine resin preferably has an average polymerization degree corresponding to a mass average polymerization degree within a range of from 1.1 to 3. If the average polymerization degree above is less than 1.1, contamination resistance is lowered in some cases. However, if the average polymerization degree above exceeds 3, workability is decreased in some cases. The average polymerization degree is more preferably in a range of from 1.1 to 2.6.

Urea Resin

Examples of the urea resin include methylol ureas such as monomethylol urea, dimethylol urea, or trimethylol urea.

Other General Use Resins

Other than the thermoplastic resins (thermoplastic elastomers included), and the thermosetting resins described above, the resin material may employ general use resins such as (meth)acrylic-based resins, EVA resins, vinyl chloride resins, fluorine-based resins, or silicone-based resins.

(Meth)acrylic-based Resin

(Meth)acrylic-based resin refers to methacrylic-based resins, and acrylic-based resins.

Methacrylic-based resin further includes methacrylic acid ester resins that include a methacrylic acid ester such as methyl methacrylate as a repeating unit, and methacrylic acid resins having a non-esterified carboxy group. Similarly, acrylic-based resin includes acrylic acid ester resins that include an acrylic acid ester such as methyl acrylate as a repeating unit, and acrylic acid resins having a non-esterified carboxy group.

Examples of the methacrylic-based resin include methacrylic-based monomers such as methacrylic acid, 2-hydroxyethyl methacrylate, 2-hydroxypropyl methacrylate, 2-hydroxybutyl methacrylate, 2-methacryloyloxy ethyl succinate, 2-methacryloyloxy ethyl hexahydrophthalate, mono-2-methacryloyloxy ethyl acid phosphate, di-2-methacryloyloxy ethyl acid phosphate, glycerin dimethacrylate, 2-hydroxy-3-acryloyloxy propyl methacrylate, 2-hydroxy-3-acryloyloxy propyl methacrylate, bisphenol A-diglycidylether methacrylate adduct, diglycerin polyglycidylether methacrylate, or 3-chloro-2-hydroxypropyl methacrylate, homopolymers of these methacrylic-based monomers, and copolymers of these methacrylic-based monomers with styrene, silicon, polyester, or the like.

Alkali metal salts, ammonium salts, phosphonium salts, and esters of phosphoric acid esters, and (meth)acrylic acids that include a (meth)acrylic group, such as di-2-methacryloyloxy ethyl acid phosphate, or di-2-acryloyloxy ethyl acid phosphate, may also be used.

As the methacrylic-based resin, one out of those above may be employed singly, or a combination of two or more thereof may be employed.

Examples of the acrylic-based resin include, acrylic-based monomers such as acrylic acid, 2-hydroxyethyl acrylate, 2-hydroxypropyl acrylate, 2-hydroxy-3-phenoxypropyl acrylate, 2-acryloyloxy ethyl succinate, 2-acryloyloxyethyl phthalic acid, 2-acryloyloxyethyl 2-hydroxyethyl-phthalic acid, mono 2-acryloyloxyethyl acid phosphate, di-2-acryloyloxyethyl acid phosphate 2-hydroxybutyl acrylate, 2-acryloyloxyethyl hexahydrophthalic acid, glycerin diglycidylether, 2-hydroxy-3-phenoxypropyl acrylate, bisphenol A diglycidyl ether acrylate adduct, O-phenylphenol glycidyl ether acrylate, 1,4-butane dioldiglycidyl ether diacrylate, 1,6-hexane diol diglycidyl ether diacrylate, dipropylene glycol diglycidylether diacrylate, pentaerythritol polyglycidylether acrylate, 2-methyl-2-ethyl 1,3-propane dioldiglycidyl ether acrylate, cyclohexane dimethanol diglycidylether acrylate, 1,6-hexane dioldiglycidylether acrylate, glycerin polyglycidyl ether acrylate, ethylene glycoldiglycidyl ether acrylate, polyethylene glycoldiglycidyl ether acrylate, dipropylene glycol diglycidylether acrylate, polypropylene glycol diglycidylether acrylate, 2-hydroxy, 1-acryloxy, 3-methacryloxypropane, or β-carboxyethyl acrylate, homopolymers of these acrylic-based monomers, and copolymers of these acrylic-based monomers with styrene, silicon, polyester, or the like. As the acrylic-based resin, one out of those above may be employed singly, or a combination of two or more thereof may be employed.

The carboxy group included in the (meth)acrylic-based resin may be an ionomer resin crosslinked by a metal such as sodium (Na).

As the (meth)acrylic-based resin, just one out of a methacrylic-based resin or an acrylic-based resin may be employed, and just one out of these may be employed.

EVA Resin

The EVA resin is a copolymer of ethylene and vinyl acetate (ethylene-vinyl acetate copolymer), and the flexibility thereof is easily controllable by regulating the content ratio of ethylene to vinyl acetate.

The EVA resin may be various commercially available products, and may be acquired as, for example, EVATATE manufactured by Sumitomo Chemical Co., Ltd., NOVATEC manufactured by Japan Polyethylene Corporation, EVAFLEX manufactured by Du Pont-Mitsui Polychemicals Co., Ltd., or the like.

Vinyl Chloride Resin

Products of copolymerizing various monomers with vinyl chloride monomers may be employed as the vinyl chloride resin.

As the copolymer monomers, fatty acid vinyl esters such as vinyl acetate, or vinyl propionate, acrylates and methacrylates such as methyl(meth)acrylate, ethyl(meth)acrylate, isopropyl(meth)acrylate, butyl(meth)acrylate, or benzyl(meth)acrylate, alkyl allyl ethers such as allyl methyl ethers, allyl ethyl ethers, allyl propyl ethers, or allyl butyl ethers, styrenes, α-methylstyrene, vinylidene chloride, acrylonitrile, ethylene, butadiene, acrylamide, and copolymer monomers having a further functional group such as vinyl acetate for a vinyl alcohol unit, 2-hydroxyethyl(meth)acrylate, polyethylene glycol(meth)acrylate, 2-hydroxypropyl(meth)acrylate, 3-hydroxypropyl(meth)acrylate, polypropylene glycol (meth)acrylate, 2-hydroxyethylallylether, 2-hydroxypropylallylether, 3-hydroxypropyl allylether, p-vinylphenol, maleic acid, maleic acid anhydride, acrylic acid, methacrylic acid, glycidyl(meth)acrylate, allyl glycidyl ethers, phosphoethyl(meth)acrylate, sulfoethyl(meth)acrylate, p-styrene sulfonate, or a sodium salt, potassium salt, or the like thereof may be employed.

These resins may be employed singly, or, if necessary, in a blend of two or more thereof.

The vinyl chloride resin may be a commercially available product, and examples thereof include G351, and G576 (the above are manufactured by Zeon Corporation).

Fluorine-based Resin

The fluorine-based resin is a resin including a fluorine atom in a molecule thereof, and examples thereof include resins in which, for example, hydrogen atoms in the thermoplastic resin (the thermoplastic elastomers included), or the thermosetting resin described above have been substituted by fluorine atoms.

Examples thereof include 4 fluoride ethylene resin, 3 fluoride chloride ethylene resin, 6 fluoride propylene resin, vinyl fluoride resin, vinylidene fluoride resin, 2 fluoride 2 chloride ethylene resin, polytetrafluoroethylene, polychloro trifluoroethylene, and perfluoroalkoxy fluorine resin, and copolymers thereof.

Examples further include fluorine resins such as tetrafluoroethylene-perfluoroalkyl vinyl ether copolymer (PFA), tetrafluoroethylene-perfluoro methyl vinyl ether copolymer (MFA), tetrafluoroethylene-perfluoro ethyl vinyl ether copolymer (EFA), polytetrafluoroethylene (PTFE), tetrafluoroethylene-hexafluoropropylene copolymer (FEP), polyethylene-tetrafluoroethylene (ETFE), polyfluoride vinylidene (PVDF), polychlorotrifluoride ethylene (PCTFE), or vinyl fluoride (PVF).

In particular, in view of heat resistance, mechanical properties, and the like, polytetrafluoroethylene (PTFE), tetrafluoroethylene-perfluoro alkyl vinyl ether copolymer (PFA), tetrafluoroethylene-perfluoro methyl vinyl ether copolymer (MFA), and tetrafluoroethylene-perfluoro ethyl vinyl ether (EFA) copolymer are suitably used.

One, or a combination of two or more of these, may be selected and employed as the fluorine resin.

Silicone-based Resin

The silicone-based resin is a polymer compound having siloxane bonds in the main chain, or a side chain thereof.

Examples thereof include methyl silicone, phenyl silicone, and phenyl methyl silicone, and one, or two or more of these, may be selected and employed.

A silicone-based resin employed may be a commercially available product, and examples thereof suitable for use include Clinbell, manufactured by Fuji Chemical Co., Ltd.

Engineering Plastic and Super Engineering Plastic

Other than the resins above, the resin material may employ so-called engineering plastic, or super engineering plastic.

An engineering plastic is a resin for which the heat resistance limit temperature (deflection temperature under load) is 100°C or above. Accordingly, out of the thermoplastic resins and the thermosetting resins described above, resins with a heat resistance limit temperature of 100°C or above are referred to as engineering plastics. Among engineering plastics, among those plastics also having a strength of 49.0 MPa, and a bending elastic modulus of 2.4 GPa or above, those with a heat resistance limit temperature of 150°C or above, are usually referred to as super engineering plastics.

Below, explanation is given regarding resins, other than the resins described above, particularly classified as engineering plastics.

Examples of engineering plastics (super engineering plastics included) include, for example, polycarbonate, liquid crystal polymers, polyphenylene ether, polyphenylene sulfide, amorphous polyarylate, polysulfone, polyether ether ketone, polyether imide, polyamide imide, polyimide, and polyacetal.

Polycarbonate

Polycarbonates are aliphatic, or aromatic, polycarbonate resins. Examples of aromatic polycarbonates include aromatic homocarbonates, and aromatic polycarbonates such as copolycarbonates, obtained by reacting an aromatic bivalent phenol-based compound with phosgene, or a carbonate diester. The employed aromatic polycarbonate preferably has a glass transition temperature within a range of from 100°C to 155°C, as measured by a differential calorimeter.

Moreover, as the aromatic bivalent phenol-based compound, 2,2-bis(4-hydroxyphenyl)propane, 2,2-bis(4-hydroxy-3,5-dimethylphenyl)propane, bis(4-hydroxyphenyl)methane, 1,1-bis(4-hydroxyphenyl)ethane, 2,2-bis(4-hydroxyphenyl)butane, 2,2-bis(4-hydroxy-3,5-diphenyl)butane, 2,2-bis(4-hydroxy-3,5-diethylphenyl)propane, 2,2-bis(4-hydroxy-3,5-diethylphenyl)propane, 1,1-bis(4-hydroxyphenyl)cyclohexane, 1-phenyl-1,1-bis(4-hydroxyphenyl)ethane, or the like may be employed. These may be employed singly, or in a mixture thereof. One or more compounds such as a hindered phenol-based, a sulfur-based, or a phosphorus-based antioxidant may also be included.

Liquid Crystal Polymer

Examples of the liquid crystal polymer include polycondensates of ethylene terephthalate and p-hydroxybenzoic acid, polycondensates of phenol, phthalic acid and p-hydroxybenzoic acid, and polycondensates of 2,6-hydroxynaphthoic acid and p-hydroxybenzoic acid.

Polyphenylene Ether

Polyphenylene ether refers to a copolymer that includes at least one out of a single polymer of Repeating Unit (PPE-1) below, or Repeating Unit (PPE-2) below, or the Repeating Unit (PPE-1) below and the Repeating Unit (PPE-2) below.

Normally, polyphenylene ethers that include the Repeating Unit (PPE-1) below, and do not include the Repeating Unit (PPE-2) below, are referred to as modified polyphenylene ethers. The modified polyphenylene ether may be an acid-modified product having an acid group such as a carboxy group in a molecule thereof.

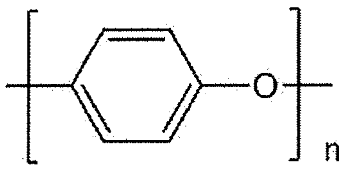

(PPE-1)

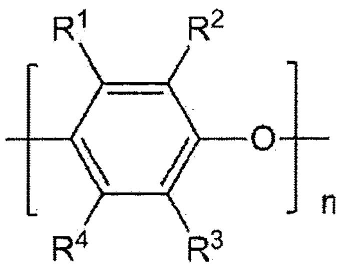

(PPE-2)

$R^1$ to $R^4$ in the Repeating Unit (PPE-2) each independently represent an alkyl group or an aryl group.

In the Repeating Unit (PPE-1), and the Repeating Unit (PPE-2), n is the number of repeating units.

Typical examples of single polymers of polyphenylene ether include poly(1,4-phenylene)ether, poly(2,6-dimethyl-1,4-phenylene)ether, poly(2,5-dimethyl-1,4-phenylene)ether, poly(2-methyl-6-ethyl-1,4-phenylene)ether, poly(2,6-diethyl-1,4-phenylene)ether, poly(2,6-diphenyl-1,4-phenylene)ether, and poly(2,3,6-trimethyl-1,4-phenylene)ether. Among these, poly(2,6-dimethyl-1,4-phenylene)ether is particularly preferable. Examples of the polyphenylene ether copolymer include copolymers of 2,6-dimethylphenol and another phenol (for example, 2,3,6-trimethylphenol, 2,6-diphenylphenol, or 2-methylphenol(o-cresol)).

The polyphenylene ether employed may be a commercially available product. Examples thereof include XYRON (a polymer alloy of a thermoplastic polyphenylene ether and a thermoplastic polystyrene-based resin) manufactured by Asahi Kasei Chemicals Corporation, and NORYL PX9701 (poly(2,6-dimethyl-1,4-phenylene)ether) manufactured by GE Plastics.

Polyphenylene Sulfide

The polyphenylene sulfide is formed of a p-phenylene sulfide group-based repeating unit, and may have a straight chain form, a branched form, a crosslinked form, or a mixture of these, and may be copolymerized with a repeating unit such as an m-phenylene sulfide group.

Amorphous Polyarylate

Examples of the amorphous polyarylate include bisphenol A/terephthalic acid, bisphenol A/isophthalic acid, and bisphenol A/terephthalic acid/isophthalic acid.

Polysulfone

The polysulfone is a resin that includes an aromatic ring, a sulfonyl group, and an ether group in the main chain thereof as repeating units, and is also referred to as a polyether sulfone.

Specifically, the polysulfone represents, for example, a polymer compound having Repeating Unit (S-1), or Repeating Unit (S-2) below. In the Repeating Unit (S-1), and the Repeating Unit (S-2), n represents the number of repeating units, and is an integer of, for example, from 50 to 80.

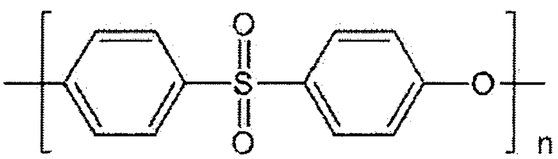

(S-1)

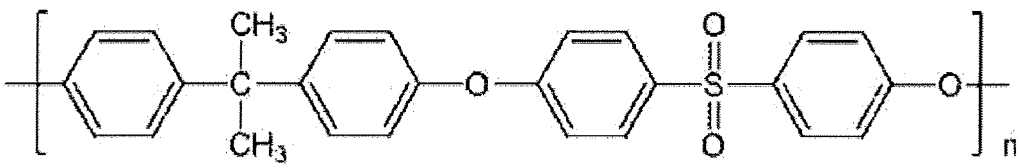

(S-2)

Specific examples of the polysulfone include polysulfones such as UDEL polysulfone P-1700 and P-3500 (manufactured by TeijinAmoco), ULTRASON S3010 and S6010 (manufactured by BASF SE), VICTREX (Sumitomo Chemical Co., Ltd.), RADEL A (manufactured by Teijin Amoco), or ULTRASON E (manufactured by BASF SE).

Although the polysulfone is preferably a compound formed of at least only one out of the Repeating Units (S-1), and (S-2) above, other monomers and copolymers may be employed within an extent not detrimental to the effects of the invention.

Polyether Ether Ketone

Examples of the polyether ether ketone include resins having Repeating Unit (EEK-1) below.

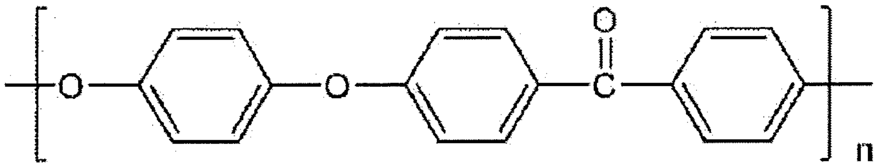

(EEK-1)

In the Repeating Unit (EEK-1) above, n represents the number of repeating units. Examples of polyether ether ketones having the repeating unit represented by the Repeating Unit (EEK-1) include "Victrex PEEK", trade name, manufactured by VICTREX plc.

Polyether Imide

The polyether imide is not particularly limited as long as it is a polymer that includes an aliphatic, alicyclic, or aromatic-class ether unit, and an annular imide group as a repeating unit, and that is a polymer with melt-formability. Examples thereof include polyether imides disclosed in US Patent No. 4141927, Japanese Patent Nos. 2622678, 2606912, 2606914, 2596565, 2596566, and 2598478, and polymers disclosed in Japanese Patent Nos. 2598536 and 2599171, JP-A H09-48852, Japanese Patent Nos. 2565556, 2564636, 2564637, 2563548, 2563547, 2558341, 2558339, and 2834580. Within a range that does not hinder the effects of the invention, the main chain of the polyether imide may include structural units other than annular imides and ether units, with examples thereof including aromatic, aliphatic, and alicyclic ester units, and oxycarbonyl units.

A commercially available product may be used as the polyether imide.

For example, a polyether imide that is a condensate of 2,2-bis[4-(2,3-dicarboxy phenoxy)phenyl]propane dianhydride with m-phenylene diamine or p-phenylene diamine, may be acquired from General Electric under the trade name "ULTEM" (registered trademark).

Polyamide Imide

More specifically, examples of the polyamide imide include, for example: a polyamide imide having a siloxane component as a polymer component; a polyamide imide including, as a polymer component, a diisocyanate component or diamine component having a cyclic hydrocarbon group (an alicyclic hydrocarbon group and/or an aromatic hydrocarbon group), and an acid component such as an acid anhydride, a polyvalent carboxylic acid, or an acid chloride; and a product of copolymerizing this polyamide imide with a polyester, or the like, such as polycaprolactone.

One, or two or more of these may be included.

Polyimide

The polyimide is a resin with imide bonds in the main chain thereof.

Examples thereof include imidified products of polyamic acids, for which the polyamic acid precursor is obtained by polymerization of a tetracarboxylic acid dianhydride, with a diamine or a triamine compound in a solvent.

Examples of tetracarboxylic acid dianhydrides include tetracarboxylic acid dianhydrides having an annular aliphatic structure.

Specific examples of tetracarboxylic acid dianhydrides having an annular aliphatic structure include 1,2,3,4-butane tetracarboxylic acid dianhydride, 3,5,6-tricarboxy norbonane-2-acetic acid dianhydride, 2,3,4,5-tetrahydrofuran tetracarboxylic acid dianhydride, bicyclo[2,2,2]-oct-7-ene-2,3,5,6-tetracarboxylic acid dianhydride, 4-(2,5-dioxotetrahydrofuran-3-yl)-1,2,3,4-tetrahydronaphthalene-1,2-dicarboxylic acid dianhydride, 5-(2,5-dioxotetrahydrofuryl)-3-methyl-cyclohexane-1,2-dicarboxylic acid dianhydride, and 2,3,5-tricarboxycyclopentylacetic acid dianhydride.

An aromatic tetracarboxylic acid anhydride having a bent structure in a molecule thereof may be employed as the tetracarboxylic acid dianhydride described above.

Specific examples of aromatic tetracarboxylic acid anhydrides having a bent structure in a molecule thereof

include 3,3',4,4'-diphenylether tetracarboxylic acid dianhydride, bis 3,3',4,4'-tetraphenylsilane tetracarboxylic acid dianhydride, 1,2,3,4-furan tetracarboxylic acid dianhydride, 4,4'-bis(3,4-dicarboxyphenoxy) diphenylsulfide dianhydride, 4,4'-bis(3,4-dicarboxyphenoxy) diphenylsulfone dianhydride, 4,4'-bis(3,4-dicarboxyphenoxy) diphenylpropane dianhydride, and 3,3',4,4'-perfluoroisopropylidene diphthalic acid dianhydride.

These tetracarboxylic acid dianhydrides may be employed singly, or in a combination of two or more thereof.

Examples of the diamine or the triamine compound include aromatic-class diamine or triamine compounds, and aliphatic-class diamine or triamine compounds.

Moreover, a polar group, such as a carboxyl group, or a hydroxy group, may be included therein.

Specific examples of the aromatic-class diamine or triamine compound include 4,4'-diaminodiphenylether, 4,4'-diaminodiphenylmethane, 3,3'-diaminodiphenylmethane, 3,3'-dichlorobenzidine, 4,4'-diaminodiphenylsulfide, 3,3'-diaminodiphenylsulfone, 1,5-diaminonaphthalene, m-phenylene diamine, p-phenylene diamine, 3,3'-dimethyl4,4'-biphenyldiamine, 3,3'-dimethylbenzidine, 3,3'-dimethoxybenzidine, 4,4'-diaminodiphenylsulfone, 4,4'-diaminodiphenylpropane, 2,4-bis(β-aminotertiary butyl)toluene, bis(p-β-amino-tertiary butylphenyl)ether, bis(p-β-methyl-δ-aminophenyl)benzene, bis-p-(1,1-dimethyl-5-amino-pentyl)benzene, 1-isopropyl-2,4-m-phenylene diamine, m-xylylene diamine, p-xylylene diamine, 3,5-diaminobenzoic acid, 3,3'-dicarboxy-4,4'-diaminodiphenylmethane, 2,4,4'-biphenyltriamine, pyridine-2,3,6-triamine, and 1,3,5-triaminobenzene.

Examples of the aliphatic diamine or triamine compound include aliphatic diamine or triamines, and alicyclic diamines such as 1,1-metaxylylene diamine, 1,3-propane diamine, tetramethylene diamine, pentamethylene diamine, octamethylene diamine, nonamethylene diamine, 4,4-diaminoheptamethylene diamine, 1,4-diaminocyclohexane, isophorone diamine, tetrahydrodicyclopentadienylene diamine, hexahydro-4,7-methanoindanylene dimethylene diamine, tricyclo[6,2,1,02.7]-undecylene-dimethyldiamine, 4,4'-methylene bis(cyclohexylamine), pentan-1,2,5-triamine, or bis(hexamethylene)triamine.

The above diamine or triamine compounds may be employed singly, or in a combination of two or more thereof.

Synthesis of the polyimide may be accomplished by a dehydration ring-closing reaction, using heating or the like, to imidify a polyamic acid obtained by allowing equivalent amounts of the previously listed tetracarboxylic acid dianhydrides, and diamine or triamine compounds, to react in a solvent.

Examples of the above imidification include heat imidification methods and chemical imidification methods.

Examples of the heat imidification method include methods in which a polyamic acid solution is heated to from 100°C to 250°C .

Examples of the chemical imidification method include methods in which a catalyst such as a tertiary amine, and a dehydrating agent such as acetic acid anhydride are added to a polyamic acid solution. In cases in which the above chemical imidification method is used, the reaction will proceed even at room temperature (for example, at 25°C). However, the reaction may be carried out at a temperature of from 60°C to 150°C in order to accelerate the chemical reaction. Although the catalyst and dehydrating agent may be removed following the reaction, employment may be made as it is, with the catalyst and dehydrating agent still present. Examples of the method of removing the catalyst and the dehydrating agent include methods in which the reaction solution is removed by heating under reduced pressure, and methods in which the reaction solution is added to a poor solvent, and removed after allowing the polyimide resin to reprecipitate.

Polyacetal

The polyacetal is a resin formed of an oxymethylene unit-based repeating unit. Examples of the polyacetal include so-called polyacetal homopolymers obtained by polymerization reactions with formaldehyde or trioxane as a primary precursor. Moreover, the polyacetal may be a polyacetal copolymer. The polyacetal copolymer is formed mainly of oxymethylene units, and has a content of 15% by mass or less of oxyalkylene units having from 2 to 8 adjacent carbon atoms in the main chains thereof.

The polyacetal may be a copolymer, namely a block copolymer, terpolymer, or crosslinked polymer that includes other structural units, and one or two or more of these may be employed. However, from the viewpoint of thermal stability, a polyacetal copolymer is preferable.

Other Resins

Other than the above, diallyl phthalate resins, methylpentene resins, biodegradable plastics, and the like, may be employed.

A biodegradable plastic is an environmentally friendly plastic that has low combustion energy and does not generate poisonous gas, is metabolically decomposed by microorganisms over time, and eventually returns to nature in the form of water and carbon dioxide.

Polylactic acid, mixtures of starch and modified polyvinyl alcohol, polybutylene succinate /adipate copolymers,

polycaprolactone, and polyhydroxybutyrate/valerate copolymers are typical biodegradable plastics.

A polylactic acid resin is a polymer formed of L-lactic acid and/or D-lactic acid as a main structural component. However, copolymerization components other than lactic acids may be included. Examples of other monomer units include: glycol compounds such as ethylene glycol, propyrene glycol, butane diol, heptane diol, hexane diol, octane diol, nonane diol, decane diol, 1,4-cyclohexane dimethanol, neopentylglycol, glycerin, pentaerythritol, bisphenol A, polyethylene glycol, polypropylene glycol, and polytetramethylene glycol; dicarboxylic acids such as oxalic acid, adipic acid, sebacic acid, azelaic acid, dodecanedioic acid, malonic acid, glutaric acid, cyclohexane dicarboxylic acid, terephthalic acid, isophthalic acid, phthalic acid, naphthalene dicarboxylic acid, bis(p-carboxyphenyl)methane, anthracene dicarboxylic acid, 4,4'-diphenylether dicarboxylic acid, 5-sodium sulfoisophthalic acid, and 5-tetrabutylphosphonium isophthalic acid; hydroxycarboxylic acids such as glycolic acid, hydroxypropionic acid, hydroxybutyric acid, hydroxyvaleric acid, hydroxycaproic acid, and hydroxybenzoic acid; and lactones such as caprolactone, valerolactone, propiolactone, undecalactone, and 1,5-oxepane-2-one.

Additives

The resin material constituting the tire frame may, in addition, include various additives.

Examples of additives include functional components, such as a plasticizer that plasticizes a thermosetting resin or a super engineering plastic, an anti-aging agent, an ultraviolet absorbent, a flame retardant, or an antistatic agent, and rubbers or the like.

These additives may be included in the resin material constituting the tire frame in addition to the first resin material and the second resin material, and these additives may also be included in the first resin material, or in the second resin material.

In the tire of the invention, the resin material may accordingly include at least one selected from the group consisting of a plasticizer, an anti-aging agent, an ultraviolet absorbent, a flame retardant, and an antistatic agent.

The resin material constituting the tire frame in the tire of the invention may, in addition to the first resin material and the second resin material described above, also include at least one selected from the group consisting of a plasticizer, an anti-aging agent, an ultraviolet absorbent, a flame retardant, and an antistatic agent. Including such components in the resin material enables the tire to be imparted with various functionalities. For example, including a plasticizer in the resin material enables greater flexibility, enabling the elastic modulus of the resin material to be lowered. Including an anti-aging agent in the resin material suppresses aging, such as oxidative degradation. Moreover, including a flame retardant in the resin material makes a tire less susceptible to combustion, even in cases in which excessive abrasion has occurred to the tire, igniting the tire, such as under sudden braking. Moreover, including an antistatic agent in the resin material enables the buildup of charge on a tire, such as static electricity, to be prevented.

Plasticizer

In order to adjust the elastic modulus of a tire frame, the resin material may also include a plasticizer as well as the first resin material and the second resin material. A plasticizer may also be included in the first resin material, and a plasticizer may also be included in the second resin material.

In particular, a plasticizer is preferably further included in cases in which the second resin material that is softer than the sea phase includes a resin with a large elastic modulus, such as a thermosetting resin or a super engineering plastic. Including a plasticizer in the second resin material together with a resin with a large elastic modulus, such as a thermosetting resin or a super engineering plastic, plasticizes the resin with a large elastic modulus, such as a thermosetting resin or a super engineering plastic, enabling the second resin material to be a resin material with a smaller elastic modulus than the first resin material constituting the sea phase.

A plasticizer may be included in the second resin material, irrespective of the type of resin included, for example, the second resin material may be a resin material including a thermoplastic resin and a plasticizer.

A plasticizer may also be included in the first resin material constituting the sea phase that is harder than the island phase, and, also for the first resin material, a plasticizer may be included irrespective of the type of resin included.

The content of any plasticizer in the resin material constituting the tire frame, the content of any plasticizer in the first resin material, and the content of any plasticizer in the second resin material, may be suitably adjusted such that the relationship of the elastic moduli of the first resin material and the second resin material result in a relationship in which the island phase is softer than the sea phase.

Examples of plasticizers include: phthalic acid derivatives such as dimethyl phthalate, diethyl phthalate, di-n-butyl phthalate, di-(2-ethylhexyl) phthalate, diheptyl phthalate, diisodecyl phthalate, di-n-octyl phthalate, diisononyl phthalate, ditridecyl phthalate, octyldecyl phthalate, butylbenzyl phthalate, and dicyclohexyl phthalate; isophthalic acid derivatives such as dimethyl isophthalate; tetrahydrophthalic acid derivatives such as di-(2-ethylhexyl) tetrahydrophthalate; adipic acid derivatives such as dimethyl adipate, dibutyl adipate, di-n-hexyl adipate, di-(2-ethylhexyl)adipate, isononyl

adipate, diisodecyl adipate, and dibutyldiglycol adipate; azelaic acid derivatives such as di-2-ethylhexyl azelaate; sebacic acid derivatives such as dibutyl sebacate; 1,10-decane dicarboxylic acid derivatives; maleic acid derivatives such as dibutyl maleate, or di-2-ethylhexyl maleate; fumaric acid derivatives such as dibutyl fumarate; trimellitic acid derivatives such as tris-2-ethylhexyl trimellitate; pyromellitic acid derivatives; citric acid derivatives such as acetyltributyl citrate; itaconic acid derivatives; oleic acid derivatives; ricinoleic acid derivatives; stearic acid derivatives; other fatty acid derivatives; sulfonic acid derivatives; phosphoric acid derivatives; glutaric acid derivatives; polyester-based plasticizers that are polymers of dibasic acids such as adipic acid, azelaic acid, and phthalic acid, with glycols, monovalent alcohols, or the like; glycol derivatives; glycerin derivatives; paraffin derivatives, such as chlorinated paraffins; epoxy derived polyester-based polymer plasticizers; polyether-based polymer plasticizers; and carbonate derivatives such as ethylene carbonate, or propylene carbonate. Plasticizers in the invention are not limited to these, and various plasticizers may be employed, and products widely sold as rubber plasticizers may also be employed.

Examples of commercially sold plasticizers include THIKOL TP (manufactured by Morton Thikol Inc.), and ADEKA CIZER (registered trademark) O-130P, C-79, UL-100, P-200, and RS-735 (manufactured by Adeka Corporation). Examples of other high molecular weight plasticizers include acrylic-based polymers, polypropylene glycol-based polymers, polytetrahydrofuran-based polymers, polyisobutylene-based polymers. Preferable examples of these are adipic acid derivatives, phthalic acid derivatives, glutaric acid derivatives, trimellitic acid derivatives, pyromellitic acid derivatives, polyester-based plasticizers, glycerin derivatives, epoxy derived polyester-based polymeric plasticizers, and polyether-based polymeric plasticizers that are low-volatility plasticizers that undergo little volume reduction on heating.

Rubber

In order to adjust the elastic modulus of the tire frame, the resin material may, in addition to the first resin material and the second resin material, include a rubber, such as a natural rubber, or a synthetic rubber. A rubber, such as a natural rubber or a synthetic rubber, may also be included in the first resin material, and a rubber, such as a natural rubber or a synthetic rubber, may also be included in the second resin material.

"Rubber" includes polymer compounds having elasticity.

In the present specification distinction is made between rubbers, and thermoplastic elastomers that are thermoplastic resin materials formed of a copolymer including a polymer constituting a hard segment that is crystalline and has a high melting temperature, and a polymer constituting a soft segment that is amorphous with a low glass transition temperature.

Although not particularly limited, examples of the rubber include natural rubbers (NR), isoprene rubbers (IR), butadiene rubbers (BR), styrene-butadiene copolymer rubbers (SBR), acrylonitrile-butadiene copolymer rubbers (NBR), chloroprene rubbers (CR), butyl rubbers (IIR), halogenated butyl rubbers (such as Br-IIR, or Cl-IIR), and ethylene-propylene-diene rubbers (EPDM). An acrylonitrile-butadiene copolymer rubber that is an NIR in which all of the butadienes are substituted by isoprenes, or that is an NBIR in which a portion of the butadienes are substituted by isoprenes, may be employed.

Of these, from the viewpoint of easily controlling the flexibility of each resin material, BR, SBR, NBR, NIR, and NBIR are preferable, and BR, SBR, IR, and NBR are more preferable.

From the viewpoints of raising the tensile elastic modulus of rubber, fixing the grain size of distributed rubber, and improving creep, a rubber may be employed that is a vulcanized rubber from vulcanizing rubber. Vulcanization of the rubber may be performed by a known method, and may, for example, be performed by a method described in JP-A Nos. H11-048264, H11-029658, 2003-238744, or the like. In cases in which a rubber is blended with a thermoplastic polyamide-based elastomer, preferably the rubber is finely divided by pulverization then introduced. In particular, preferably dynamic cross-linking is employed to distribute the rubber and perform crosslinking (vulcanization) while kneading the rubber with a thermoplastic polyamide-based elastomer.

Vulcanization of rubber may be performed by appropriate blending of, for example, a reinforcing material such as carbon black, a filler, an additive, a vulcanization agent, a vulcanization accelerator, a fatty acid or salt thereof, a metal oxide, a process oil, an anti-aging agent, or the like, into the rubber, then, after kneading using a Banbury mixer, heating to from 120°C to 235°C.

A known vulcanization agent, such as, for example, sulfur, an organic peroxide, or a resin vulcanization agent, may be employed as the vulcanization agent.

Examples of the vulcanization accelerator that may be employed include known vulcanization accelerators, such as those that are aldehyde-based, ammonia-based, amine-based, guanidine-based, thiourea-based, thiazole-based, sulfenamide-based, thiram-based, dithiocarbamate-based, or xanthate-based.

Examples of the fatty acid include stearic acid, palmitic acid, myristic acid, and lauric acid, and these may be in a salt compound form, like that of stearic acid zinc. Of these, stearic acid is preferable.

Examples of the metal oxide include zinc oxide (ZnO), iron oxide, and magnesium oxide, and of these zinc oxide is preferable.

The process oil used may be any out of those that are aromatic-based, naphthene-based, and paraffin-based.
Examples of the anti-aging agent include those that are amine-ketone-based, imidazole-based, amine-based, phenol-based, sulfur-based, and phosphorus-based.

Functional Component

The resin material may include various functional components in addition to the first resin material and the second resin material, so as to impart various functionalities to the tire. Various functional components may also be included in the first resin material, and various functional components may also be included in the second resin material.
Examples of functional components include an anti-aging agent, an ultraviolet absorbent, a flame retardant, and an antistatic agent.

Anti-aging Agent

Aging processes such as oxidative degradation may be suppressed by including an anti-aging agent in the resin material.
Other than the anti-aging agents usable in the vulcanization of rubber described above, examples of the anti-aging agents include amine-based anti-aging agents such as phenyl-α-naphthylamine (PAN), octyl diphenylamine, N,N'-diphenyl-p-phenylene diamine (DPPD), N,N'-di-β-naphthyl-p-phenylene diamine (DNPD), N-(1,3-dimethylbutyl)-N'-phenyl-p-phenylene diamine, N-phenyl-N'-isopropyl-p-phenylene diamine (IPPN), N,N'-diallyl-p-phenylene diamine, phenothiazine derivatives, diallyl-p-phenylene diamine mixtures, alkylated phenylene diamine, 4,4'-bis(α, α-dimethylbenzyl)diphenylamine, N-phenyl-N'-(3-methacryloyloxy-2-hydropropyl)-p-phenylene diamine, diallylphenylene diamine mixture, diallyl-p-phenylene diamine mixture, N-(1-methylheptyl)-N'-phenyl-p-phenylene diamine, or diphenylamine derivatives, imidazole-based anti-aging agents such as 2-mercaptobenzimidazole (MBI), phenol-based anti-aging agents such as 2,6-di-t-butyl-4-methylphenol, or pentaerythrityltetrakis[3-(5-di-t-butyl-4-hydroxyphenol)-propionate], phosphate-based anti-aging agents such as nickel diethyl-dithiocarbamate, secondary anti-aging agents such as triphenylphosphite, 2-t-butyl-6-(3-t-butyl-2-hydroxy-5-methylbenzyl)-4-methylphenyl acrylate, and 2-[1-(2-hydroxy-3,5-di-t-pentylphenyl)ethyl]-4,6-di-t-pentylphenyl acrylate.
These may be employed singly, or employed in a combination of two or more thereof.

Ultraviolet Absorbent

Deterioration caused by ultraviolet irradiation may be suppressed, even in environments where the tire is subjected to direct sunlight, by including an ultraviolet absorbent in the resin material.
Examples of the ultraviolet absorbent include 4-t-butylphenyl salicylate, 2,4-dihydroxy benzophenone, 2,2'-dihydroxy-4-methoxy benzophenone, ethyl-2-cyano-3,3'-diphenyl acrylate, 2-ethylhexyl-2-cyano-3,3'-diphenyl acrylate, 2-hydroxy-5-chlorobenzophenone, 2-hydroxy-4-methoxybenzophenone-2-hydroxy-4-octoxy benzophenone, monoglycol salicylate, oxalic acid amide, and 2,2',4,4'-tetrahydroxybenzophenone.
A light stabilizer may also be employed.
These may be employed singly, or more be employed in a combination of two or more types thereof.
Examples of specific products that are these kinds of anti-aging agent or ultraviolet absorbent include, IRGANOX (registered trademark) 1010 (manufactured by Ciba Specialty Chemicals), SANOL (registered trademark) LS770 (manufactured by Sankyo Lifetech Co., Ltd.), ADEKA STAB (registered trademark) LA-57 (manufactured by Adeka Corporation), ADEKA STAB LA-68 (manufactured by Adeka Corporation), CHIMASSORB (registered trademark) 944 (manufactured by Ciba Specialty Chemicals), SANOL LS765 (manufactured by Sankyo Lifetech Co., Ltd.), ADEKA STAB LA-62 (manufactured by Adeka Corporation), TINUVIN (registered trademark) 144 (manufactured by Ciba Specialty Chemicals), ADEKA STAB LA-63 (manufactured by Adeka Corporation), TINUVIN 622 (manufactured by Ciba Specialty Chemicals), ADEKA STAB LA-32 (manufactured by Adeka Corporation), ADEKA STAB LA-36 (manufactured by Adeka Corporation), TINUVIN 571 (manufactured by Ciba Specialty Chemicals), TINUVIN 234 (manufactured by Ciba Specialty Chemicals), ADEKA STAB LA-31 (manufactured by Adeka Corporation), TINUVIN 1130 (manufactured by Ciba Specialty Chemicals), ADEKA STAB AO-20 (manufactured by Adeka Corporation), ADEKA STAB AO-50 (manufactured by Adeka Corporation), ADEKA STAB 2112 (manufactured by Adeka Corporation), ADEKA STAB PEP-36 (manufactured by Adeka Corporation), SUMILIZER GM (Sumitomo Chemical Co., Ltd.), SUMILIZER GS (Sumitomo Chemical Co., Ltd.), and SUMILIZER TP-D (Sumitomo Chemical Co., Ltd.).
These may be employed singly, or more be employed in a combination of two or more types thereof.

Flame Retardant

Including a flame retardant in the resin material makes a tire less susceptible to combustion, even in cases in which excessive abrasion has occurred to the tire, such as under sudden braking.
Examples of the flame retardant include, triphenylphosphate, tricresylphosphate, tris(chloropropyl)phosphate, polyphosphate, phosphate-based polyols, decabromobiphenyl, decabromobiphenylether, antimony trioxide, ammonium phosphate, ammonium polyphosphate, phosphoric acid guanidine, perchlorocyclodecane, aluminum hydroxide, magnesium hydroxide, chlorinated paraffins, polyethylene chloride, perchlorocyclodecane, boron-based compounds, and zirconium-based compounds; however, there is no limitation to the above.
These may be employed singly, or in a combination of two or more thereof.

Antistatic Agent

A buildup of charge on a tire such as static electricity can be prevented by including an antistatic agent in the resin material.
Examples of the antistatic agent include inorganic antistatic agents, and organic antistatic agents.
Specific examples of the inorganic antistatic agent include alkali metal salts such as sodium chloride, or potassium chloride, or alkaline earth metal salts such as calcium chloride, or barium chloride.
Examples of the organic antistatic agent include various glycerin-based or amine-based examples such as a glycerin fatty acid ester, a polyoxyethylene alkylphenyl ether, an alkyldiethanol amine, a hydroxyalkyl monoethanol amine, a polyoxyethylene alkylamine, a polyoxyethylene alkylamine fatty acid ester, or an alkyldiethanol amide. Among organic antistatic agents, examples of anionic antistatic agents include alkyl sulfonates, alkylbenzene sulfonates, alkylphosphates, polyacrylates, polystyrene sulfonates, and polymaleates.
Examples of cationic antistatic agents include various quaternary ammonium salts such as a tetraalkyl ammonium salt, or a trialkyl benzyl ammonium salt.
Examples of amphoteric types of antistatic agent include alkylbetaine, and alkylimidazolium betaines.
These may be employed singly, or in combination with two or more thereof.
The content of the above additives in each of the resin materials may be suitably adjusted so as to exhibit the desired functionality, limited to not impairing the impact resistance effect of the invention.

Physical Properties of the Resin Material

Explanation follows regarding preferable physical properties of the resin material constituting the tire frame (the resin material having a sea/island structure including a sea phase constituted by the first resin material and an island phase constituted by the second resin material that is softer than the sea phase).
The melting temperature (or softening temperature) of the resin material (tire frame) itself is normally from 100°C to 350°C, is preferably from approximately 100°C to approximately 250°C, and from the viewpoint of manufacturability of the tire, is preferably from approximately 120°C to approximately 250°C, and is more preferably from 120°C to 200°C.
When, for example, a frame of a tire is formed by welding together divided bodies (frame pieces), by using a resin material with a melting temperature of from 120°C to 250°C in this manner achieves sufficient strength of bonding of the tire frame pieces together even for a frame welded in an ambient temperature range of from 120°C to 250°C. The tire of the invention accordingly has excellent durability during running, such as puncture resistance and abrasion resistance properties. The heating temperature is preferably a temperature that is from 10°C to 150°C higher, and is more preferably a temperature from 10°C to 100°C higher, than the melting temperature (or softening temperature) of the resin material forming the tire frame pieces.
The resin material may be obtained by mixing together the first resin material and second resin material described above, and adding various additives if necessary, and mixing as appropriate using a known method (for example melt mixing).
As stated above, normally a sea/island structure with the first resin material as the sea phase, and the second resin material as the island phase, is formed by setting the ratio ($M_1$/ $M_2$) of the mass of the first resin material constituting the sea phase ($M_1$) to the mass of the second resin material constituting the island phase ($M_2$) to exceed 1. Consequently, in order that the resin material includes a sea/island structure, the first resin material and the second resin material are preferably mixed such that the ratio ($M_1$/ $M_2$) of the mass of the first resin material constituting the sea phase (M1) and the mass of the second resin material constituting the island phase ($M_2$) exceeds 1.
A resin material obtained by melt mixing may be employed in a pellet form, if necessary.
The resin material (the tire frame) itself has a bending elastic modulus as defined in JIS K7171 of preferably 50 MPa to 2000 MPa, more preferably 70 MPa to 1700 MPa, and still more preferably 90 MPa to 1500 MPa. When the

bending elastic modulus of the resin material is 500 MPa to 2000 MPa, fitting onto a rim can be carried out efficiently while maintaining the shape of the frame of the tire.

The resin material (the tire frame) itself has a tensile elastic modulus as defined in JIS K7113:1995 of preferably 100 MPa to 1000 MPa, more preferably 100 MPa to 800 MPa, and still more preferably 100 MPa to 700 MPa. When the tensile elastic modulus of the resin material is 100 MPa to 700 MPa, fitting onto a rim can be carried out efficiently while maintaining the shape of the frame of the tire.

The resin material (the tire frame) itself has a tensile yield strength as defined in JIS K7113:1995 of equal to or higher than 5 MPa, more preferably 5 MPa to 20 MPa, and still more preferably 5 MPa to 17 MPa. When the tensile yield strength of the resin material is equal to or higher than 5 MPa, resistance to deformation caused by a load applied to a tire during traveling or the like can be achieved.

The resin material (the tire frame) itself preferably has a tensile yield elongation as defined in JIS K7113:1995 of equal to or higher than 10%, more preferably 10% to 70%, and still more preferably 15% to 60%. When the tensile yield elongation of the resin material is equal to or higher than 10%, the elastic region is large, and the fittability onto a rim is improved.

The resin material (the tire frame) itself preferably has a tensile elongation at break as defined in JIS K7113:1995 of equal to or higher than 50%, more preferably equal to or higher than 100%, still more preferably equal to or higher than 150%, and particularly preferably equal to or higher than 200%. When the tensile elongation at break of the resin material is equal to or higher than 50%, fittability onto a rim is excellent, and resistance to breaking at collision can be obtained.

The resin material (the tire frame) itself preferably has a deflection temperature under load (under a load of 0.45 MPa) as defined in ISO 75-2 or ASTM D648 of equal to or higher than 50°C, more preferably 50°C to 150°C, and still more preferably 50°C to 130°C. When the deflection temperature under load of the resin material is equal to or higher than 50°C, deformation of a tire frame can be suppressed even in cases in which vulcanization is performed during the production of a tire.

[Embodiment 1]

A tire according to Embodiment 1 of the tire of the invention will be described below with reference to the drawings.

A tire 10 according to this embodiment will be described below. Fig. 1A is a perspective view illustrating a cross-section of a part of a tire according to one embodiment of the invention. Fig. 1B is a cross-sectional view of a bead portion fitted to a rim. As shown in Fig. 1A, the tire 10 according to this embodiment has substantially the same cross-sectional shape as those of conventional general rubber pneumatic tires.

As shown in Fig. 1A, the tire 10 includes a tire case 17 composed of: a pair of bead portions 12 each contacting with a bead seat 21 and a rim flange 22 of a rim 20 shown in Fig. 1B; side portions 14 that extend from the bead portions 12 toward the outer side in the tire radial direction; and a crown portion 16 (outer peripheral portion) that connect the outer end in the tire radial direction of one side portion 14 and the outer end in the tire radial direction of the other side portion 14.

The tire case 17 of the present embodiment is configured employing a resin material including a non-elastomer thermoplastic polyamide-based resin (for example UBE NYLON "1022B", manufactured by Ube Industries, Ltd.: bending elastic modulus 1004.6 MPa) as a first resin material constituting a sea phase, and employing a thermoplastic polyester-based elastomer (for example HYTREL "3046", manufactured by Du Pont-Toray Co., Ltd.: bending elastic modulus 24.24 MPa) as a second resin material constituting an island phase, softer than the sea phase, such that the first resin material content by mass M1: the second resin material content by mass M2 = 70:30.

The tire case 17 of the present embodiment is formed with a single resin material (a non-elastomer thermoplastic polyamide-based resin + a thermoplastic polyester-based elastomer); however, the configuration of the invention is not limited thereto, and, similarly to ordinary conventional rubber-made pneumatic tires, thermoplastic resin materials with different characteristics may be employed for each of the sections of the tire case 17 (such as the side portions 14, the crown portion 16 and the bead portions 12). The tire case 17 may be reinforced by a reinforcing material by embedding the reinforcing material (such as fibers, cord, nonwoven fabric, or woven fabric of a polymer material or metal) in the tire case 17 (for example, in the bead portions 12, the side portions 14, the crown portion 16, and the like).

The tire case 17 according to the present embodiment is formed by bonding a pair of tire case half parts (tire frame pieces) 17A formed of a sea/island structural resin material including a polyamide-based thermoplastic resin which is not an elastomer as the sea phase and a polyester-based thermoplastic elastomer as the island phase to each other. The tire case half parts 17A is formed by placing circular tire case half parts 17A that have the same shape and that are obtained by molding one bead portion 12, one side portion 14, and a half-width of the crown portion 16 as an integral body by injection molding or the like, to face each other, and bonding the half parts to each other at the tire equatorial plane portion. The tire case 17 is not limited to that obtained by bonding two members, and may be formed by bonding three or more members.

Each tire case half part 17A formed of the resin material can be molded by, for example, vacuum molding, pressure molding, injection molding, or melt casting. Accordingly, when compared with a conventional case in which the tire case is molded from rubber, it is not necessary to perform vulcanization, as a result of which the production process can remarkably be simplified, and the molding time can be saved.

In the present embodiment, the tire case half parts 17A have a symmetric shape, that is, one tire case half part 17A and the other tire case half part 17A have the same shape; therefore, there is an advantage in that the tire case half parts 17A can be molded using only one type of mold.

In the present embodiment, as shown in Fig. 1B, an annular bead core 18 formed of a steel cord is embedded in each bead portion 12, similarly to conventional general pneumatic tire. However, the invention is not limited to this configuration; the bead core 18 may be omitted as long as the rigidity of the bead portions 12 is ensured and there is no problem in fitting to the rim 20. Other than the steel cord, the bead core may be formed of an organic fiber cord, a resin-coated organic fiber cord, a hard resin, or the like.

In the present embodiment, an annular sealing layer 24 formed of a material having higher sealing properties than those of the resin material constituting the tire case 17, for example rubber, is provided on a part of the bead portion 12 that contacts the rim 20 or at least on a part of the bead portion 12 that contacts the rim flange 22 of the rim 20. The sealing layer 24 may also be provided in a part in which the tire case 17 (the bead portion 12) and the bead seat 21 contact each other. A material softer than the resin material that constitutes the tire case 17 may be used as the material having higher sealing properties than those of the resin material that constitutes the tire case 17. It is preferable to use, as a rubber usable for the sealing layer 24, the same kind of rubber as a rubber used on the outer surface of a bead portion of a conventional general rubber pneumatic tire. When the sealing between the bead portion 12 and the rim 20 can be ensured only with the resin material that constitutes the tire case 17, the rubber sealing layer 24 may be omitted, or other thermoplastic resins (thermoplastic elastomers) having higher sealing properties than those of the resin material may be used. Examples of other thermoplastic resins include resins such as a polyurethane-based resin, a polyolefin-based resin, a polystyrene-based thermoplastic resin, and a polyester resin, and a blend of any of these resins with a rubber or an elastomer. Thermoplastic elastomers can also be used, and examples thereof include a polyester-based thermoplastic elastomer, a polyurethane-based thermoplastic elastomer, a polystyrene-based thermoplastic elastomer, and a polyolefin-based thermoplastic elastomer, and any combination of these elastomers and a blend of any of these elastomers with a rubber.

As shown in Fig. 1, in the crown portion 16, a reinforcing cord 26 having higher rigidity than that of the resin material constituting the tire case 17 is wound in the circumferential direction of the tire case 17. The reinforcing cord 26 is helically wound to form a reinforcing cord layer 28 in a state in which at least a part of the reinforcing cord 26 is embedded in the crown portion 16 in a cross-sectional view taken along the axial direction of the tire case 17. A tread 30 formed of a material, such as rubber, having higher abrasion resistance than that of the resin material constituting the tire case 17 is disposed on the outer circumference side in the tire radial direction of the reinforcing cord layer 28.

The reinforcing cord layer 28 formed by the reinforcing cord 26 will be described below with reference to Fig. 2. Fig. 2 is a cross-sectional view taken along the tire rotation axis, which illustrates a state in which the reinforcing cord is embedded in the crown portion of the tire case of the tire according to Embodiment 1. As shown in Fig. 2, the reinforcing cord 26 is helically wound in a state in which at least a part of the reinforcing cord 26 is embedded in the crown portion 16 in a cross-sectional view taken along the axial direction of the tire case 17, and, together with a part of the outer circumferential portion of the tire case 17, forms the reinforcing cord layer 28 specified by the dotted lines in Fig. 2. The part of the reinforcing cord 26 that is embedded in the crown portion 16 is in close contact with the resin material constituting the crown portion 16 (the tire case 17). A monofilament (single filament) of a metal fiber, an organic fiber, or the like, or a multifilament (stranded filament) in which fibers are stranded, such as a steel cord composed of steel fibers, may be used as the reinforcing cord 26. In the present embodiment, a steel cord is used as the reinforcing cord 26.

The embedding depth L in Fig. 2 represents the depth of embedding of the reinforcing cord 26 in the tire case 17 (the crown portion 16) in the tire rotation axis direction. The depth of embedding L of the reinforcing cord 26 in the crown portion 16 is preferably equal to or greater than 1/5 of the diameter D of the reinforcing cord 26, and more preferably more than 1/2 of the diameter D of the reinforcing cord 26. It is most preferable that the entire reinforcing cord 26 be embedded in the crown portion 16. When the depth of embedding L of the reinforcing cord 26 is more than 1/2 of the diameter D of the reinforcing cord 26, the reinforcing cord 26 is difficult to drop off from the embedded portion due to the dimensions of the reinforcing cord 26. When the reinforcing cord 26 is entirely embedded in the crown portion 16, the surface (the outer circumferential surface) becomes flat, whereby entry of air into an area around the reinforcing cord can be suppressed even when a member is placed on the crown portion 16 in which the reinforcing cord 26 is embedded. The reinforcing cord layer 28 corresponds to a belt disposed on the outer circumferential surface of a carcass of a conventional rubber pneumatic tire.

As described above, the tread 30 is disposed on the outer circumferential side in the tire radial direction of the reinforcing cord layer 28. It is preferable that the same kind of rubber as that used for conventional rubber pneumatic tires is used as the rubber used for the tread 30. It is also possible to use, instead of the tread 30, a tread formed of

another kind of resin material which has higher abrasion resistance than that of the resin material constituting the tire case 17. In the tread 30, a tread pattern composed of plural grooves is formed on the contact surface that comes into contact with a road surface, similarly to conventional rubber pneumatic tires.

A method of producing a tire of the invention will be described below.

(Tire Case Forming Step)

First, tire case half parts supported by thin metal support rings are arranged to face each other. Subsequently, a mold for bonding, which is not shown in the drawings, is placed so as to contact the outer circumferential surface of a portion at which the tire case half parts are contacted with each other. Here, the mold for bonding is configured to pressurize a region at or around the bonding section (the contact portion) of the tire case half parts A with a predetermined pressure. Then, the region at or around the bonding section of the tire case half parts is pressurized at a temperature equal to or higher than the melting temperature (or the softening temperature) of the resin material that constitutes the tire case. When the bonding section of the tire case half parts is heated and pressurized by the mold for bonding, the bonding section is melted, and the tire case half parts are fused with each other, as a result of which the members are integrated to form the tire case 17. Although the bonding section of the tire case half parts is heated using the mold for bonding in the present embodiment, the invention is not limited to this configuration; heating of the bonding section may be carried out using, for example, a separately-provided high-frequency heater, or the tire case half parts may be bonded by softening or melting the bonding section, in advance, via application of hot air, irradiation of infrared rays or the like, and pressurizing the bonding section using the mold for bonding.

(Reinforcing Cord Member Winding Step)

Next, a reinforcing cord winding step will be described below using Fig. 3. Fig. 3 is an explanatory diagram explaining an operation of embedding the reinforcing cord in the crown portion of the tire case using a cord heating device and rollers. In Fig. 3, a cord feeding apparatus 56 includes a reel 58 on which a reinforcing cord 26 is wound, a cord heating device 59 disposed at the downstream side in the cord feeding direction of the reel 58, a first roller 60 disposed at the downstream side in the reinforcing cord 26 feeding direction, a first cylinder unit 62 for moving the first roller 60 in directions in which the first roller comes into contact with and get away from the outer circumferential surface of the tire, a second roller 64 disposed at the downstream side in the reinforcing cord 26 feeding direction of the first roller 60, and a second cylinder unit 66 for moving the second roller 64 in directions in which the first roller comes into contact with and get away from the outer circumferential surface of the tire. The second roller 64 can be used as a cooling roller formed of metal. In the present embodiment, the surface of the first roller 60 or the second roller 64 is coated with a fluororesin (TEFLON (registered trademark) in the case of the present embodiment) with a view to suppressing adhesion of the melted or softened resin material. Although the cord feeding apparatus 56 is configured to have two rollers of the first roller 60 and the second roller 64 in the present embodiment, the invention is not limited to this configuration, and the cord feeding apparatus may be configured to have only one of these rollers (that is, a single roller).

The cord heating device 59 includes a heater 70 and a fan 72 that generate hot air. The cord heating device 59 includes a heating box 74 into which hot air is supplied and in which the reinforcing cord 26 passes through the inside space thereof, and an discharge port 76 through which the heated reinforcing cord 26 is discharged.

In this step, first, the temperature of the heater 70 of the cord heating device 59 is increased, and the air around the heater 70 heated by the heater 70 is sent to the heating box 74 by an air current generated by the rotation of the fan 72. Then, the reinforcing cord 26 drawn out from the reel 58 is fed to the inside of the heating box 74 of which the inner space is heated with hot air, whereby the reinforcing cord 25 is heated (for example, to increase the temperature of the reinforcing cord 26 to be about 100°C to about 200°C). The heated reinforcing cord 26 passes through the discharge port 76, and is helically wound, with a constant tension, around the outer circumferential surface of the crown portion 16 of the tire case 17 rotating in the direction of arrow R in Fig. 3. Here, as a result of the heated reinforcing cord 26 coming into contact with the outer circumferential surface of the crown portion 16, the resin material at the contact portion is melted or softened, and at least a part of the heated reinforcing cord 26 is embedded in the outer circumferential surface of the crown portion 16. In this process, since the heated reinforcing cord 26 is embedded in the melted or softened resin material, the resin material and the reinforcing cord 26 get into a state in which no space is left between the resin material and the reinforcing cord 26, that is, in a tightly-contacted state. Accordingly, the incorporation of air into the portion in which the reinforcing cord 26 is embedded is suppressed. By heating the reinforcing cord 26 to a temperature higher than the melting temperature (or the softening temperature) of the resin material of the tire case 17, the melting or softening of the resin material in the portion contacting the reinforcing cord 26 is promoted. By employing this configuration, embedding of the reinforcing cord 26 in the outer circumferential surface of the crown portion 16 is facilitated, and the incorporation of air can effectively be suppressed.

The depth L of embedding of the reinforcing cord 26 can be adjusted by the heating temperature for the reinforcing cord 26, the tension applied to the reinforcing cord 26, the pressure applied from the first roller 60, etc. In the present embodiment, the depth L of embedding of the reinforcing cord 26 is set to be equal to or greater than 1/5 of the diameter D of the reinforcing cord 26. The depth L of embedding of the reinforcing cord 26 is more preferably more than 1/2 of the diameter D, and it is still more preferable that the entire reinforcing cord 26 is embedded.

In this way, a reinforcing cord layer 28 is formed on the outer circumference side of the crown portion 16 of the tire case 17 by winding the heated reinforcing cord 26 on the outer circumferential surface of the crown portion 16 such that the heated reinforcing cord 26 is embedded in the outer circumferential surface of the crown portion 16.

A belt-shaped vulcanized tread 30 is wound on the outer circumferential surface of the tire case 17 for one revolution, and the tread 30 is bonded to the outer circumferential surface of the tire case 17 using, for example, an adhesive. For example, precured treads known thus far for use in retreaded tires may be used as the tread 30. This step is a step similar to a step of bonding a precured tread to the outer circumferential surface of a casing of a retreaded tire.

A tire 10 can be completed by bonding a sealing layer 24 formed of a vulcanized rubber to the bead portion 12 of the tire case 17 using, for example, an adhesive.

Effects

In the tire 10 of the present embodiment, due to the tire case 17 being formed of a resin material of sea/island structure including a non-elastomer thermoplastic polyamide-based resin as the sea phase and a thermoplastic polyester-based elastomer as the island phase, excellent elasticity is achieved. The tire 10 is accordingly capable of absorbing or rebounding against external load (impact), and has excellent impact resistance properties. The tire 10 has a simpler structure than that of a conventional rubber-made tire, and is hence lighter in weight. The tire 10 of the present embodiment accordingly has high antiabrasion properties and durability.

In addition, in the tire 10 of the embodiment, since the reinforcing cord 26 having a higher stiffness than the resin material is wound in a spiral shape in the circumferential direction on the outer circumferential surface of the crown portion16 in the tire case 17 formed of the resin material, the puncture resistance, the cutting resistance and the stiffness of the tire 10 in the circumferential direction are improved. Meanwhile, the improvement of the stiffness of the tire 10 in the circumferential direction prevents the creeping in the tire case 17 formed of the resin material.

In a cross-sectional view taken along the axial direction of the tire case 17 (the cross-section shown in Fig. 1), at least a part of the reinforcing cord 26 is embedded in the outer circumferential surface of the crown portion 16 of the tire case 17 formed of the resin material, and is in close contact with the resin material, as a result of which incorporation of air during production is suppressed, and movement of the reinforcing cord 26 due to, for example, a force applied at the time of traveling is suppressed. Accordingly, separation between the reinforcing cord 26, the tire case 17, and the tread 30 is suppressed, and the durability of the tire 10 is improved.

In a case in which the reinforcing cord layer 28 is configured to include the resin material as described above, the reinforcing cord 26 can be made to more tightly contact the tire case 17 and fixed to the tire case 17 since the difference in hardness between the tire case 17 and the reinforcing cord layer 28 can be made smaller than that in a case in which the reinforcing cord 26 is fixed using a cushion rubber. Accordingly, the incorporation of air mentioned above can effectively be prevented, and the movement of the reinforcing cord member at the time of traveling can effectively be suppressed.

In a case in which the reinforcing cord 26 is a steel cord, the reinforcing cord 26 can easily be separated from the resin material by heating and recovered at the time of disposing of the tire, and, therefore, there is an advantage from the viewpoint of recyclability of the tire 10. Further, since the resin material has a lower loss factor (tan $\delta$) compared with vulcanized rubbers, inclusion of a large amount of the resin material in the reinforcing cord layer 28 makes it possible to enhance the rolling properties of the tire. Compared with vulcanized rubbers, the resin material has advantages in terms of high in-plane shear stiffness, excellent steering stability at the time of traveling with the tire, and excellent abrasion resistance.

In addition, since the depth L of embedding of the reinforcing cord 26 is equal to or greater than 1/5 of the diameter D as illustrated in Fig. 2, incorporation of air during manufacturing is effectively suppressed, and the movement of the reinforcing cord 26 due to input power or the like while travelling is further suppressed.

Since the tread 30 that contacts a road surface is formed of a rubber material having higher abrasion resistance than that of the resin material constituting the tire case 17, the abrasion resistance of the tire 10 is improved.

Since the annular bead core 18 formed of a metal material is embedded in the bead portion 12, the tire case 17 is strongly fixed to the rim 20, i.e., the tire 10 is strongly fixed to the rim 20, similarly to conventional rubber pneumatic tires.

Since the sealing layer 24 formed of a rubber material having higher sealing ability than the resin material constituting the tire case 17 is disposed in a region of the bead portion 12 that contacts the rim 20, sealing between the tire 10 and the rim 20 is improved. Therefore, compared with a case in which sealing is carried out with the rim 20 and

the resin material constituting the tire case 17, air leakage from the tire is further suppressed. Further, provision of the sealing layer 24 also improves fittability to the rim.

Although a configuration in which the reinforcing cord 26 is heated such that the polyamide-based thermoplastic elastomer in a portion that contacts the heated reinforcing cord 26 is melted or softened is adopted in the embodiment described above, the invention is not limited to this configuration; a hot air generating device may be used, instead of heating the reinforcing cord 26, to heat the outer circumferential surface of the crown portion 16 in which the reinforcing cord 26 is to be embedded, and the reinforcing cord 26 may thereafter be embedded in the crown portion 16.

Although the heat source of the cord heating device 59 includes the heater and the fan in Embodiment 1, the invention is not limited to this configuration, and a configuration in which the reinforcing cord 26 is directly heated by radiation heat (for example, infrared rays) may be adopted.

Although a configuration in which a region at which the resin material with the reinforcing cord 26 embedded therein is melted or softened is forcibly cooled with the second roller 64 formed of metal is adopted in Embodiment 1, the invention is not limited to this configuration; a configuration in which cold air is directly applied to the region at which the resin material is melted or softened, to forcibly cool and solidify the region at which the resin material is melted or softened may also be adopted.

Although a configuration in which the reinforcing cord 26 is heated is adopted in Embodiment 1, a configuration in which the outer circumference of the reinforcing cord 26 is coated with the same resin material as that of the tire case 17, for example, may be adopted. In this case, by heating the coated resin material along with the reinforcing cord 26 when the coated reinforcing cord is wound on the crown portion 16 of the tire case 17, incorporation of air can effectively be suppressed at the time of embedding the reinforcing cord in the crown portion 16.

Helically winding the reinforcing cord 26 is easy from the viewpoint of production. However, a method in which the reinforcing cord 26 is discontinuous in the width direction, for example, may also be contemplated.

The tire 10 according to Embodiment 1 is a so-called tubeless tire in which an air chamber is formed between the tire 10 and the rim 20 by fitting the bead portion 12 to the rim 20. However, the invention is not limited to this configuration, and a complete tube shape may be adopted.

[Embodiment 2]

Embodiment 2 of the method for producing a tire and the tire according to the second aspect of the invention will be described below with reference to the drawings. Similarly to Embodiment 1, the tire according to this embodiment has substantially the same cross-sectional shape as those of conventional general rubber pneumatic tires. Accordingly, in the following drawings, the same elements as those described in Embodiment 1 will be designated by the same reference numerals. Fig. 4A is a cross-sectional view of the tire according to Embodiment 2 taken along the tire width direction, and Fig. 4B is an enlarged view of a cross-section, taken along the tire width direction, of a bead portion in a state in which a rim is fitted to the tire according to Embodiment 2. Fig. 5 is a cross-sectional view taken along the tire width direction, which illustrates a region around a reinforcing layer of the tire according to Embodiment 2.

A tire of the second embodiment, similarly to in the first embodiment described above, has a tire case 17 configured by employing a resin material including a non-elastomer thermoplastic polyamide-based resin (for example UBE NYLON "1022B", manufactured by Ube Industries, Ltd.: bending elastic modulus 1004.6 MPa) as a first resin material constituting a sea phase, and employing a thermoplastic polyester-based elastomer (for example HYTREL "3046", manufactured by Du Pont-Toray Co., Ltd: bending elastic modulus 24.24 MPa) as a second resin material constituting an island phase, softer than the sea phase, wherein the first resin material content by mass M1: the second resin material content by mass M2 = 70:30.

In the tire 200 of the embodiment, the reinforcing cord layer 28 that is formed by winding a coated cord member 26B in the circumferential direction (illustrated in Fig. 5 using a broken line) is superposed on the crown portion 16 as illustrated in Figs. 4A and 5. The reinforcing cord layer 28 configures the outer circumferential portion of the tire case 17, and reinforces the stiffness of the crown portion 16 in the circumferential direction. Meanwhile, the outer circumferential surface of the reinforced cord layer 28 is included in the outer circumferential surface 17S of the tire case 17.

The coated cord member 26B is formed by a cord member 26A that has higher rigidity than the resin material forming the tire case 17, and that is coated with a coating resin material 27 as another member than the resin material forming the tire case 17. In regions in which the coated cord member 26B contacts the crown portion 16, the coated cord member 26B and the crown portion 16 are bonded (for example, welded, or adhered with an adhesive) to each other.

The tensile elastic modulus of the coating resin material 27 is preferably set to be within a range of 0.1 times to 10 times the tensile elastic modulus of the resin material forming the tire case 17. When the tensile elastic modulus of the coating resin material 27 is equal to or less than 10 times the tensile elastic modulus of the resin material forming the tire case 17, the crown portion is not excessively hard, and the fittability to a rim is facilitated. When the tensile elastic modulus of the coating resin material 27 is equal to or higher than 0.1 times the tensile elastic modulus of the resin material forming the tire case 17, the resin constituting the reinforcing cord layer 28 is not excessively soft, and the in-plane shear stiffness of the belt is excellent, whereby the cornering power. In the present embodiment, the same material as the resin material constituting the tire frame is used as the coating resin material 27.

As shown in Fig. 5, the coated cord member 26B has a substantially trapezoidal cross-sectional shape. In the following description, the top surface (the outer surface in the tire radial direction) of the coated cord member 26B is designated by reference numeral 26U, and the bottom surface (the inner surface in the tire radial direction) is designated by reference numeral 26D. Although a configuration in which the cross-sectional shape of the coated cord member 26B is substantially trapezoidal is adopted in the present embodiment, the invention is not limited to this configuration; the cross-sectional shape of the coated cord member 26B may be any shape other than a shape in which the width increases from the bottom surface 26D side (the inner side in the tire radial direction) to the top surface 26U side (the outer side in the tire radial direction).

As shown in Fig. 5, since coated cord members 26B are arranged with intervals in the circumferential direction, gaps 28A are formed between adjacent cord members 26B. Accordingly, the outer circumferential surface of the reinforcing cord layer 28 has irregularities, and the outer circumferential surface 17S of the tire case 17 of which the outer circumferential portion is formed of the reinforcing cord layer 28 also has irregularities.

Minute roughening irregularities are uniformly formed on the outer circumferential surface 17S (including irregularities) of the tire case 17, and a cushion rubber 29 is bonded thereon with a bonding agent therebetween. The rubber portion at the inner side in the radial direction of the cushion rubber 29 has flowed into the roughening irregularities.

A tread 30 formed of a material, such as rubber, having higher abrasion resistance than the resin material forming the tire case 17 is bonded onto the cushion rubber 29 (onto the outer circumferential surface of the cushion rubber 29).

The rubber to be used in the tread 30 (a tread rubber 30A) is preferably the same kind of rubber as the rubber used for conventional rubber pneumatic tires. A tread formed of another kind of resin material having higher abrasion resistance than that of the resin material forming the tire case 17 may be used instead of the tread 30. Similarly to conventional rubber pneumatic tires, the tread 30 has a tread pattern (not shown in the drawings) formed by plural grooves on the contact surface with a road surface.

A method of producing a tire according to the present embodiment will be described below.

(Frame Forming Step)

First, tire case half parts 17A are formed in the same way as in Embodiment 1, and the tire case half parts are heated and pressurized using a mold for bonding, thereby forming a tire case 17.

(Reinforcing Cord Member Winding Step)

A tire producing apparatus according to the present embodiment is the same as in Embodiment 1. In the cord feeding apparatus 56 shown in Fig. 3 as described in Embodiment 1, a coated cord member 26B which has a substantially trapezoidal cross-sectional shape, and which is obtained by coating the cord member 26A with the coating resin material 27 (the same resin material as that for forming the tire case in the present embodiment), and which is wound around the reel 58, is used.

First, the temperature of the heater 70 is increased, and the air around the heater 70 heated by the heater 70 is sent to the heating box 74 by an air current generated by the rotation of the fan 72. Then, the coated cord member 26B drawn out from the reel 58 is fed to the inside of the heating box 74 of which the inner space is heated with hot air, whereby the reinforcing cord member is heated (for example, to increase the temperature of the outer circumferential surface of the reinforcing cord member 26B to be equal to or higher than the melting temperature (or softening temperature) of the coating resin material 27). Here, as a result of the heating of the coated cord member 26B, the coating resin material 27 becomes melted or softened.

The coated cord member 26B passes through the discharge port 76, and is helically wound, with a constant tension, around the outer circumferential surface of the crown portion 16 of the tire case 17 rotating in a direction of approaching from the paper surface. At this time, the bottom surface 26D of the coated cord member 26B comes into contact with the outer circumferential surface of the crown portion 16. The melted or softened coating resin material 27 at the contact portion spreads on the outer circumferential surface of the crown portion 16, and the coated cord member 26B is welded to the outer circumferential surface of the crown portion 16. Thereby, the bonding strength between the crown portion 16 and the coated cord member 26B is increased.

(Roughening Treatment Step)

Then, in a blasting apparatus not shown in the drawings, a blasting abrasive is shot to the outer circumferential surface 17S of the tire case 17 while the tire case 17 is rotated. The blasting abrasive that has been shot collides with

the outer circumferential surface 17S to form minute roughening irregularities 96 with an arithmetic average roughness Ra of 0.05 mm or more on the outer circumferential surface 17S.

By forming minute roughening irregularities 96 on the outer circumferential surface 17S of the tire case 17 in this manner, the outer circumferential surface 17S is made hydrophilic, and the wettability of the below-described adhesive is improved.

(Superposing Step)

A bonding agent is applied to the outer circumferential surface 17S of the tire case 17 that has been subjected to the roughening treatment.

The bonding agent is not particularly limited, and may be, for example, a triazine thiol-based adhesive, a chlorinated rubber-based adhesive, a phenol-based resin adhesive, an isocyanate-based adhesive, a halogenated rubber-based adhesive, a rubber-based adhesive, or the like. The bonding agent is preferably capable of reacting at a temperature (90°C to 140°C) at which the cushion rubber 29 can be vulcanized.

A non-vulcanized cushion rubber 29 is wound, for one revolution, on the outer circumferential surface 17S to which the bonding agent has been applied, and a bonding agent such as a rubber cement composition is applied onto the cushion rubber 29. A vulcanized or semi-vulcanized tread rubber 30A is wound thereon for one revolution, to become to be in the green tire case state.

(Vulcanization Step)

Then, the green tire case is housed in a vulcanization can or a mold, and is vulcanized. In this recess, unvulcanized cushion rubber 29 flows into the roughening irregularities 96, which have been formed on the outer circumferential surface 17S of the tire case 17 through the roughening treatment. Once the vulcanization is completed, an anchor effect is exerted by the cushion rubber 29 that has flowed into the roughening irregularities 96, and the bonding strength between the tire case 17 and the cushion rubber 29 is increased. That is, the bonding strength between the tire case 17 and the tread 30 is enhanced due to the presence of the cushion rubber 29.

A tire 200 is completed by adhering a sealing layer 24 formed of a soft material softer than the resin material to the bead portion 12 of the tire case 17 by using an adhesive or the like.

Effects

The tire 200 of the present embodiment has excellent elasticity due to the tire case 17 being formed of a resin material of sea/island structure including a thermoplastic polyamide-based resin as the sea phase and a thermoplastic polyester-based elastomer as the island phase. The tire 200 is accordingly capable of absorbing or rebounding against external load (impact), and has excellent impact resistance properties. The tire 200 has a simpler structure than that of a conventional rubber-made tire, and is hence lighter in weight. The tire 200 of the present embodiment accordingly has high antiabrasion properties and durability.

In the method for producing a tire according to the present embodiment, when the tire case 17, the cushion rubber 29, and the tread rubber 30A are integrated, the bonding properties (adhesion properties) is improved by the anchor effect since the outer circumferential surface 17S of the tire case 17 has been subjected to the roughening treatment. Further, since the resin material forming the tire case 17 is ploughed due to collision of the blasting abrasive, the wettability of the bonding agent is improved. Therefore, the bonding agent is retained, in a uniformly applied state, on the outer circumferential surface 17S of the tire case 17, whereby the bonding strength between the tire case 17 and the cushion rubber 29 can be ensured.

In particular, even in a case in which irregularities are formed on the outer circumferential surface 17S of the tire case 17, a portion surrounding a recess (walls at the recess, the bottom of the recess) is roughened by allowing the blasting abrasive to collide with the portion surrounding the recess (the gap 28A), whereby the bonding strength between the tire case 17 and the cushion rubber 29 can be ensured.

Since the cushion rubber 29 is superposed on the roughened area of the outer circumferential surface 17S of the tire case 17, the bonding strength between the tire case 17 and the cushion rubber can effectively be ensured.

In the case of vulcanization of the cushion rubber 29 in the vulcanization step, the cushion rubber 29 flows into the roughening irregularities that have been formed on the outer circumferential surface 17S of the tire case 17 through the roughening treatment. Once the vulcanization is completed, an anchor effect is exerted by the cushion rubber 29 that has flowed into the roughening irregularities, and the bonding strength between the tire case 17 and the cushion rubber 29 is enhanced.

In the tire 200 produced by the method for producing a tire, the bonding strength between the tire case 17 and the cushion rubber 29 is ensured. That is, the bonding strength between the tire case 17 and the tread 30 is ensured

due to the presence of the cushion rubber 29. Therefore, separation between the outer circumferential surface 17S of the tire case 17 and the cushion rubber 29 in the tire 200 is suppressed.

Since the outer circumferential portion of the tire case 17 is formed of the reinforcing cord layer 28, puncture resistance and cutting resistance are improved, compared with a case in which the outer circumferential portion is formed of a member other than the reinforcing cord layer 28.

Since the coated cord member 26B is wound to form the reinforcing cord layer 28, the rigidity in the circumferential direction of the tire 200 is improved. Since the rigidity in the circumferential direction is improved, creeping of the tire case 17 (a phenomenon in which the plastic deformation of the tire case 17 increases with lapse of time under a constant stress) is suppressed, and pressure resistance to air pressure applied from the inner side in the tire radial direction is improved.

Moreover, the reinforcing cord layer 28 is configured including the covered cord member 26B, enabling a smaller difference in hardness between the tire case 17 and the reinforcing cord layer 28 than in cases in which the reinforcing cord 26A is simply fixed with the cushion rubber 29, thereby enabling even closer contact and better fixing of the covered cord member 26B to the tire case 17. This thereby enables incorporation of air, as described above, to be effectively prevented, enabling movement of the reinforcing cord member during running to be effectively suppressed.

Moreover, cases in which the reinforcing cord 26A is steel cord enable easy separation and recovery from the covered cord member 26B by heating the cord member 26A when disposing of the tire, with this being advantageous from the perspective of recycling characteristics of the tire 200. The loss coefficient (tan $\delta$) of resin material is also lower than that of vulcanized rubber, enabling the tire rolling characteristics to be improved when the reinforcing cord layer 28 includes a lot of resin material. Moreover, the in-plane shear stiffness is larger for resin material than that of vulcanized rubber, with the advantages of excellent steering stability and abrasion resistance during running of the tire.

Although irregularities are formed on the outer circumferential surface 17S of the tire case 17 in the present embodiment, the invention is not limited to this configuration, and a configuration in which the outer circumferential surface 17S is formed flat may be adopted.

In the tire case 17, a reinforcing cord layer may be formed by covering, with a coating thermoplastic material, the coated cord member that has been wound on the crown portion of the tire case and bonded thereto. In this case, the coating layer can be formed by ejecting the coating thermoplastic material in the melted or softened state onto the reinforcing cord layer 28. The coating layer may be formed without using an extruder, by heating a welding sheet into a melted or softened state, and attaching the welding sheet to the surface (the outer circumferential surface) of the reinforcing cord layer 28.

Although case divided parts (tire case half parts 17A) are bonded to form the tire case 17 in Embodiment 2, the invention is not limited to this configuration, and the tire case 17 may be formed as an integrated body using, for example, a mold.

The tire 200 according to Embodiment 2 is a so-called tubeless tire in which an air chamber is formed between the tire 200 and the rim 20 by fitting the bead portion 12 to the rim 20. However, the invention is not limited to this configuration, and the tire 200 may have, for example, a complete tube shape.

Although the cushion rubber 29 is interposed between the tire case 17 and the tread 30 in Embodiment 2, the invention is not limited to this configuration, and a configuration in which the cushion rubber 29 is not provided may be adopted.

Although a configuration in which the coated cord member 26B is helically wound on the crown portion 16 is adopted in Embodiment 2, the invention is not limited to this configuration, and a configuration in which the coated cord member 26B is wound but discontinuous in the width direction may be adopted.

In Embodiment 2, a configuration is adopted in which a thermoplastic material is used as the coating resin material 27 that forms the coated cord member 26B, and in which the coating resin material 27 is melted or softened by heating, thereby welding the coated cord member 26B to the outer circumferential surface of the crown portion 16. However, the invention is not limited to this configuration, and a configuration in which the coated cord member 26B is adhered to the outer circumferential surface of the crown portion 16 using an adhesive or the like, without heating the coating resin material 27, may be adopted.

A configuration may be adopted in which the coating resin material 27 that forms the coated cord member 26B is a thermosetting resin, and in which the coated cord member 26B is adhered to the outer circumferential surface of the crown portion 16 using an adhesive or the like, without heating the coated cord member 26B.

A configuration may be adopted in which the coating resin material 27 that forms the coated cord member 26B is a thermosetting resin, and in which the tire case 17 is formed of a resin material. In this case, the coated cord member 26B may be adhered to the outer circumferential surface of the crown portion 16 using an adhesive or the like, or the coated cord member 26B may be welded to the outer circumferential surface of the crown portion 16 by heating a portion of the tire case 17 at which the coated cord member 26B is to be disposed to get into a melted or softened state.

A configuration may be adopted in which the coating resin material 27 that forms the coated cord member 26B is a thermoplastic material, and in which the tire case 17 is formed of a resin material. In this case, the coated cord

member 26B may be adhered to the outer circumferential surface of the crown portion 16 using an adhesive or the like, or the coated cord member 26B may be welded to the outer circumferential surface of the crown portion 16 by heating a portion of the tire case 17 at which the coated cord member 26B is to be disposed to get into a melted or softened state as well as heating the coating resin material 27 to get into a melted or softened state. In a case in which both the tire case 17 and the coated cord member 26B are heated to get into a melted or softened state, both materials mix with each other well, thereby increasing the bonding strength. In a case in which each of the resin material that forms the tire case 17 and the coating resin material 27 that forms the coated cord member 26B is a resin material, the resin materials thereof are preferably thermoplastic materials of the same kind, and particularly the same thermoplastic material.

The outer circumferential surface 17S of the tire case 17 that has been subjected to the roughening treatment may be subjected to corona treatment, plasma treatment or the like so as to activate the outer circumferential surface 17S and so as to enhance the hydrophilicity, and an adhesive may thereafter be applied thereto.

The sequence employed in the production of the tire 200 is not limited to the sequence specified in Embodiment 2, and may be modified, as appropriate.

Although modes for carrying out the invention are described above with reference to embodiments, the embodiments are merely examples, and may be practiced with various modifications within a range that does not depart from the gist of the invention. Of course, the protection scope of the invention is not limited to these embodiments.

Although modes for carrying out the invention are described above with reference to embodiments, the embodiments are merely examples, and may be practiced with various modifications within a range that does not depart from the gist of the invention. Of course, the protection scope of the invention is not limited to these embodiments.

EXAMPLES

More specific explanation regarding the invention is given below based on Examples. However the invention is not limited thereto.

First, tires of Examples and Comparative Examples were formed according to the first embodiment. When doing so, the materials listed in the following Table 1 were employed as the material for forming the tire cases. Physical evaluation of the materials and evaluation of the tire performance was performed as set out below for each of the Examples and Comparative Examples.

Preparation of Pellets

The respective first resin materials and the second resin materials illustrated in Table 1 were mixed together, and the respective resin materials kneaded using a twin-screw extruder "LABO PLASTOMILL 50MR" manufactured by Toyo Seiki Seisaku-sho, Ltd. (at a mixing temperature of from 210°C to 240°C) and pellets obtained.

Note that in the Comparative Examples 1 and 2 mixing was not performed, and pellets of a single resin were prepared.

Bending Elastic Modulus Evaluation

Test samples were produced, and the bending elastic modulus measured, using a method in accordance with JIS K7171.

More specifically, the prepared pellets were employed, and injection molding was performed employing a SE30D, manufactured by Sumitomo Heavy Industries Co., Ltd., at a molding temperature of from 210°C to 240°C, with a mold temperature of from 50°C to 70°C. Rectangular strip shaped test samples were produced using a mold of 80 mm × 10 mm with a thickness of 4 mm.

Then, using a Shimadzu Autograph AGS-J (5KN), manufactured by Shimadzu Corporation, the bending elastic modulus (secant method) of each of the rectangular strip shaped test samples was measured under conditions of a test speed of 2 mm/min, a distance between support points L = 64 mm, an indenter radius R1 = 5 mm, and a support base radius R2 = 5 mm.

Results are illustrated in Table 1 below.

The state of the resin material constituting the tire frame is illustrated in Table 1. Formation of either an island phase formed of the second resin material distributed in a sea phase formed of the first resin material, or a single phase of the first resin material or the second resin material, was confirmed by looking at images captured with a scanning electron microscope (SEM).

Impact Resistance Testing

Test samples were produced employing prepared pellets, employing an injection molding machine (SE36D, manufactured by Sumitomo Heavy Industries Co., Ltd) to perform injection molding employing a mold of 10 mm × 100 mm × a thickness 4 mm, and samples were prepared by notching with a notching machine. A Charpy impact tester (trade name: Model 141, manufactured by Yasuda Seiki Seisakusho Ltd.) was employed to perform impact testing at room temperature (23°C). Evaluation was made based on the following evaluation criteria.

Evaluation Criteria

A: Energy expended in fracturing sample exceeds 5 $kJ/m^2$.
B: Energy expended in fracturing sample is 5 $kJ/m^2$ or below.

Shape Retaining Characteristics

A tire similar to that of the first embodiment was formed employing the resin in Table 1. The tire was fitted to a rim, and incorporated with air to a specific (250 kPa), and shape retaining characteristics were evaluated based on the following evaluation criteria.

Evaluation Criteria

A: Could be fitted onto rim, shape could be retained
B: Could be fitted onto rim, however air seal could not be achieved, or deformation occurred
C: Could not be fitted onto rim

From the results in Table 1, elastic modulus coefficients were computed for the resin materials of the Example and the Comparative Example based on Inequality (1) above, and are illustrated in Table 2.

TABLE 1

| | | C.Ex-1 | Ex-1 | Ex-2 | C. Ex-2 | Ex-3 | C. Ex-3 | Ex-4 | Ex-5 | Ex-6 |
|---|---|---|---|---|---|---|---|---|---|---|
| First resin material | 1022B by Ube Industries, Ltd. | 100 | 70 | 60 | 30 | 95 | - | 60 | 55 | 55 |
| | E-2900 by Prime Polymer Co., Ltd | - | - | - | - | - | - | - | - | - |
| | 3020U by Ube Industries, Ltd. | - | - | - | - | - | - | - | - | 5 |
| Second resin material | 3046 by Du Pont-Toray Co., Ltd | - | 30 | 40 | 70 | 5 | 100 | - | - | - |
| | TAFMER MH7010 by Mitsui Chemicals, Inc. | - | - | - | - | - | - | 20 | 20 | 20 |
| | TAFMER A1050 by Mitsui Chemicals, Inc. | - | - | - | - | - | - | 20 | 20 | 20 |
| | XPA9040 by Ube Industries, Ltd. | - | - | - | - | - | - | - | 5 | - |
| State of resin material constituting tire frame | | Single ph. | S-I st. | S-I st. | S-I st. | S-I st. | Single ph. | S-I st. | S-I st. | S-I st. |
| Bending elastic modulus (MPa) | | 1004.6 | 550.8 | 408.4 | 52.4 | 930 | 24.24 | 550.1 | 540.3 | 545.4 |
| Elastic modulus coefficient | | 0 | 0.0103 | 0.0161 | 0.0563 | 0.00127 | - | 0.0063 | 0.0132 | 0.0067 |
| Impact resistance testing | | B | A | A | A | B | A | A | A | A |
| Shape retaining characteristics | | C | A | A | B | C | C | A | A | A |
| | | C.Ex-4 | C.Ex-5 | Ex-7 | Ex-8 | Ex-9 | C. Ex-6 | C. Ex-7 | C. Ex-8 | |
| First resin material | 1022B by Ube Industries, Ltd. | - | - | - | - | - | - | - | - | |
| | E-2900 by Prime Polymer Co., Ltd | - | - | 90 | 80 | 95 | 100 | - | - | |
| | 3020U by Ube Industries, Ltd. | - | 100 | - | - | - | - | - | - | |
| Second resin material | 3046 by Du Pont-Toray Co., Ltd | - | - | - | - | - | - | - | - | |
| | TAFMER MH7010 by Mitsui Chemicals, Inc. | - | - | - | - | - | - | 100 | - | |
| | TAFMERA1050 by Mitsui Chemicals, Inc. | - | - | 10 | 20 | 5 | - | - | 100 | |
| | XPA9040 by Ube Industries, Ltd. | 100 | - | - | - | - | - | - | - | |
| State of resin material constituting tire frame | | Single ph. | Single ph. | S-I st. | S-I st. | S-I st. | Single ph. | Single ph. | Single ph. | |
| Bending elastic modulus (MPa) | | 71.1 | 1285.8 | 382.5 | 315 | 573.1 | 590 | 11 | 8 | |
| Elastic modulus coefficient | | - | 0 | 0.0015 | 0.0034 | 0.00071 | 0 | - | - | |
| Impact resistance testing | | A | B | A | A | B | B | A | A | |
| Shape retaining characteristics | | B | C | A | A | C | C | B | B | |

In Table 1, the abbreviation "Ex." denotes "Example Number", the abbreviation "C. Ex." denotes "Comparative Example Number", the abbreviation "-" denotes "None", the abbreviation "Single ph." denotes "Single phase", and the abbreviation "S-I st." denotes "sea/island structure".

The components in Table 1 are as follows.

· First Resin Material

UBE Nylon "1022B", manufactured by Ube Industries, Ltd.
(Non-elastomer thermoplastic polyamide-based resin, bending elastic modulus 1004.6 MPa) "E-2900", manufactured by Prime Polymer Co., Ltd.
(Non-elastomer thermoplastic polyolefin-based resin, bending elastic modulus 590 MPa) UBESTA "3020U", manufactured by Ube Industries, Ltd.
(Thermoplastic polyamide-based resin (Nylon 12), bending elastic modulus 1285.8 MPa)

· Second Resin Material

HYTREL "3046", manufactured by Du Pont-Toray Co., Ltd.
(Thermoplastic polyester-based elastomer, bending elastic modulus 24.24 MPa) TAFMER "MH7010", manufactured by Mitsui Chemicals, Inc.
(Thermoplastic polyolefin-based elastomer, bending elastic modulus less than 10 MPa) TAFMER "A1050", manufactured by Mitsui Chemicals, Inc.
(Thermoplastic polyolefin-based elastomer, bending elastic modulus less than 10 MPa) "XPA9040", manufactured by Ube Industries, Ltd. (Thermoplastic polyamide-based elastomer, bending elastic modulus 71.1 MPa)

As can be seen from Table 1, each of the test samples produced in each Example had an appropriate flexibility with a bending elastic modulus that was neither too high nor too low in contrast to the test samples produced for the Comparative Example. The impact resistance testing evaluation results and shape retaining characteristic evaluation results were also superior to those of the Comparative Example. This demonstrates that a tire manufactured employing a tire case formed using the same resin material as the test samples of the Example exhibits excellent impact resistance properties, for example exhibiting a durability that inhibits damage due to contact between the tire and a curb or the like.

## Claims

1. A tire, comprising a circular tire frame formed of a material containing a resin, the material comprising:

   a sea/island structure including a sea phase constituted by a first resin material; and
   an island phase that is constituted by a second resin material, and that is softer than the sea phase.

2. The tire according to claim 1, wherein the second resin material comprises: a second thermoplastic resin; or a second thermosetting resin and a plasticizer; or a combination thereof

3. The tire according to claims 2, wherein the second thermoplastic resin comprises at least one selected from the group consisting of a thermoplastic polyolefin-based elastomer, a thermoplastic polystyrene-based elastomer, a thermoplastic polyamide-based elastomer, a thermoplastic polyurethane-based elastomer, a thermoplastic polyester-based elastomer, and a dynamically crosslinking-type thermoplastic elastomer.

4. The tire according to any one of claims 1 to 3, wherein the first resin material comprises at least one of a first thermoplastic resin or a first thermosetting resin.

5. The tire according to claim 4, wherein the first resin material comprises a thermoplastic polyamide-based resin or a thermoplastic polyolefin-based resin, and the second thermoplastic resin comprises at least one selected from the group consisting of a thermoplastic polyester-based elastomer, a thermoplastic polyolefin-based elastomer and a thermoplastic polyamide-based elastomer.

6. The tire according to claim 5, wherein a ratio by mass of the first resin material to the second thermoplastic resin (first thermoplastic resin: second thermoplastic resin) is from 55:45 to 90:10.

7. The tire according to any one of claims 1 to 6, wherein the material comprises at least one selected from the group consisting of an anti-aging agent, an ultraviolet absorbent, a flame retardant and an antistatic agent.

## Patentansprüche

1. Reifen, umfassend einen kreisförmigen Reifenrahmen, der aus einem Material gebildet ist, das ein Harz enthält, wobei das Material Folgendes umfasst:

    eine See-/Insel-Struktur, die eine Seephase, die aus einem ersten Harzmaterial besteht, und
    eine Inselphase umfasst, die aus einem zweiten Harzmaterial besteht und die weicher ist als die Seephase.

2. Reifen nach Anspruch 1, wobei das zweite Harzmaterial Folgendes umfasst: ein zweites thermoplastisches Harz; oder ein zweites Duroplastharz und einen Weichmacher oder eine Kombination davon.

3. Reifen nach Anspruch 2, wobei das zweite thermoplastische Harz mindestens eines umfasst ausgewählt aus der Gruppe bestehend aus einem thermoplastischen Elastomer auf Polyolefinbasis, einem thermoplastischen Elastomer auf Polystyrolbasis, einem thermoplastischen Elastomer auf Polamidbasis, einem thermoplastischen Elastomer auf Polyurethanbasis, einem thermoplastischen Elastomer auf Polyesterbasis und einem thermoplastischen Elastomer vom dynamisch vernetzenden Typ.

4. Reifen nach einem der Ansprüche 1 bis 3, wobei das erste Harzmaterial mindestens eines von einem ersten thermoplastischen Harz oder einem ersten Duroplastharz umfasst.

5. Reifen nach Anspruch 4, wobei das erste Harzmaterial ein thermoplastisches Harz auf Polyamidbasis oder ein thermoplastisches Harz auf Polyolefinbasis umfasst und das zweite thermoplastische Harz mindestens eines ausgewählt aus der Gruppe bestehend aus einem thermoplastischen Elastomer auf Polyesterbasis, einem thermoplastischen Elastomer auf Polyolefinbasis und einem thermoplastischen Elastomer auf Polyamidbasis umfasst.

6. Reifen nach Anspruch 5, wobei ein Massenverhältnis des ersten Harzmaterials zu dem zweiten thermoplastischen Harz (des ersten thermoplastischen Harzes:dem zweiten thermoplastischen Harz) 55:45 bis 90:10 beträgt.

7. Reifen nach einem der Ansprüche 1 bis 6, wobei das Material mindestens eines umfasst ausgewählt aus der Gruppe bestehend aus einem Antialterungsmittel, einem Ultraviolettabsorptionsmittel, einem Flammenschutzmittel und einem Antistatikmittel.

## Revendications

1. Pneumatique, comprenant une carcasse circulaire de pneumatique formée d'un matériau contenant une résine, le matériau comprenant:

    une structure type mer/île incluant une phase mer constituée d'un premier matériau de résine; et
    une phase île qui est constituée d'un second matériau de résine, et qui est plus souple que la phase mer.

2. Pneumatique selon la revendication 1, dans lequel le second matériau de résine comprend: une seconde résine thermoplastique; ou une seconde résine thermodurcissable et un agent plastifiant; ou une combinaison de ceux-ci.

3. Pneumatique selon la revendication 2, dans lequel la seconde résine thermoplastique comprend au moins l'un sélectionné dans le groupe constitué d'un élastomère thermoplastique à base de polyoléfine, d'un élastomère thermoplastique à base de polystyrène, d'un élastomère thermoplastique à base de polyamide, d'un élastomère thermoplastique à base de polyuréthane, d'un élastomère thermoplastique à base de polyester, et d'un élastomère thermoplastique de type réticulation dynamique.

4. Pneumatique selon l'une quelconque des revendications 1 à 3, dans lequel le premier matériau de résine comprend

au moins l'une d'une première résine thermoplastique ou d'une première résine thermodurcissable.

5. Pneumatique selon la revendication 4, dans lequel le premier matériau de résine comprend une résine thermoplastique à base de polyamide ou une résine thermoplastique à base de polyoléfine, et la seconde résine thermoplastique comprend au moins l'un sélectionné dans le groupe constitué d'un élastomère thermoplastique à base de polyester, d'un élastomère thermoplastique à base de polyoléfine et d'un élastomère thermoplastique à base de polyamide.

6. Pneumatique selon la revendication 5, dans lequel un rapport en masse du premier matériau de résine à la seconde résine thermoplastique (première résine thermoplastique:seconde résine thermoplastique) est de 55:45 à 90:10.

7. Pneumatique selon l'une quelconque des revendications 1 à 6, dans lequel le matériau comprend au moins l'un sélectionné dans le groupe constitué d'un agent antivieillissement, d'un agent d'absorption du rayonnement ultraviolet, d'un agent ignifuge et d'un agent antistatique.

FIG.1A

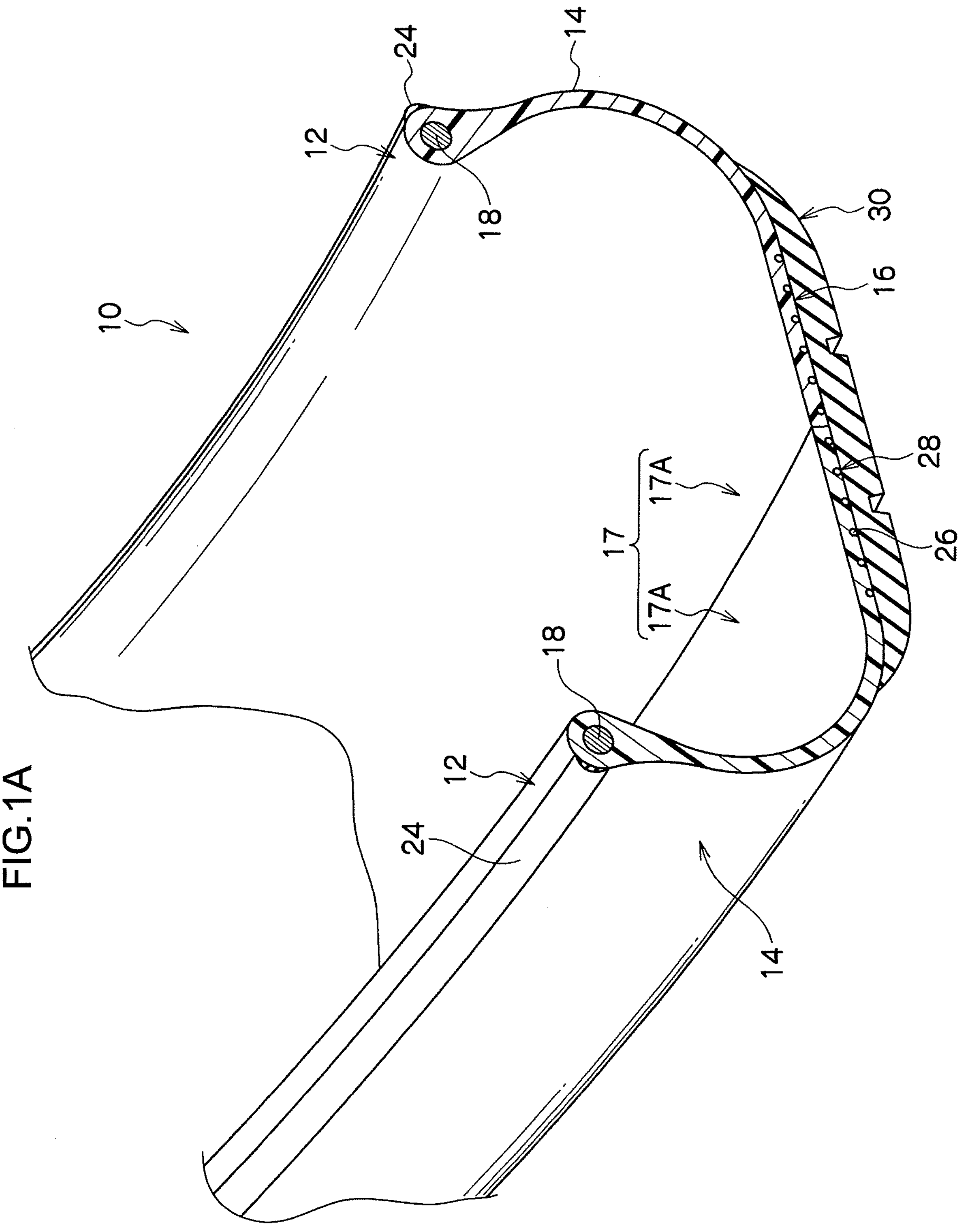

FIG.1B

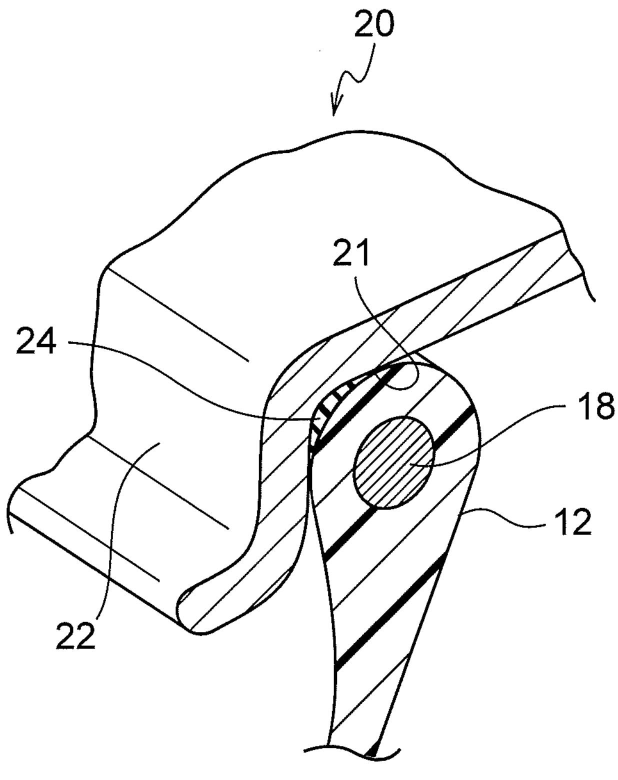

FIG.2

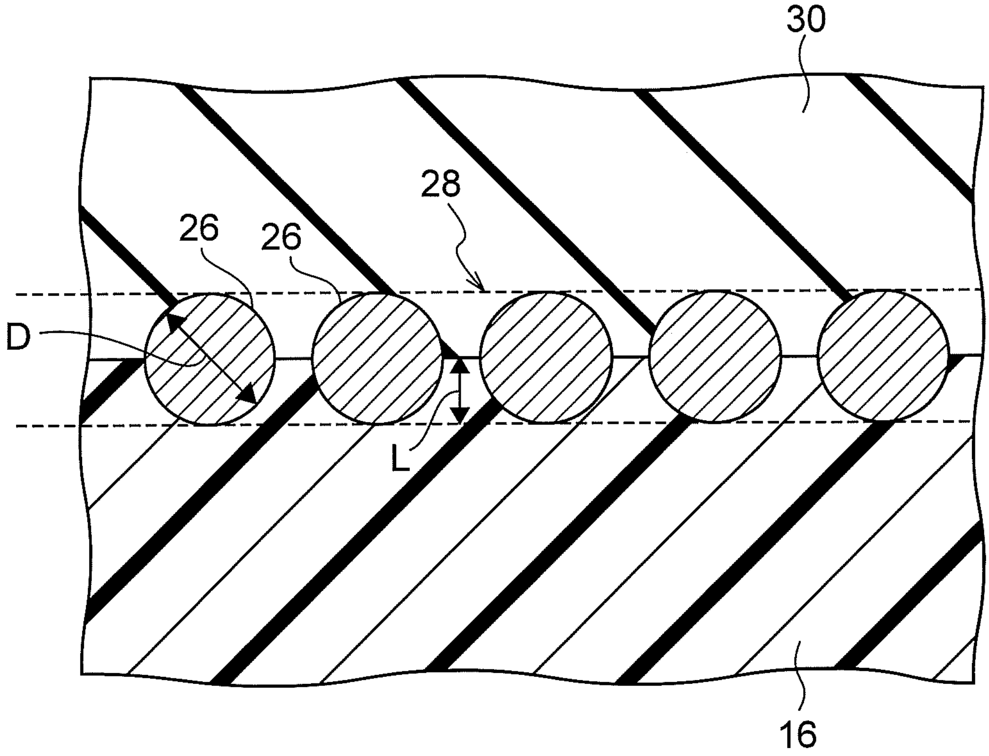

FIG.3

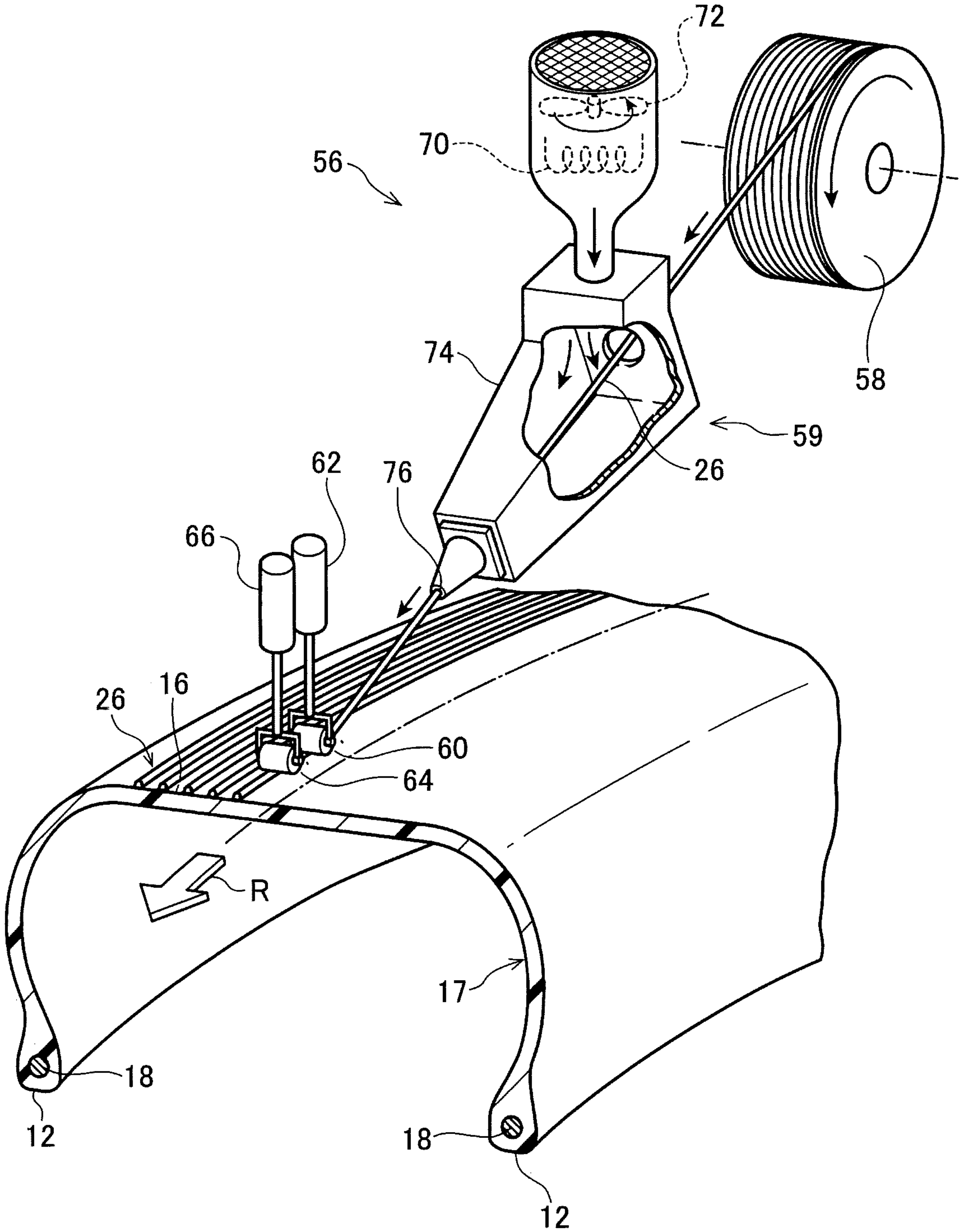

FIG.4A

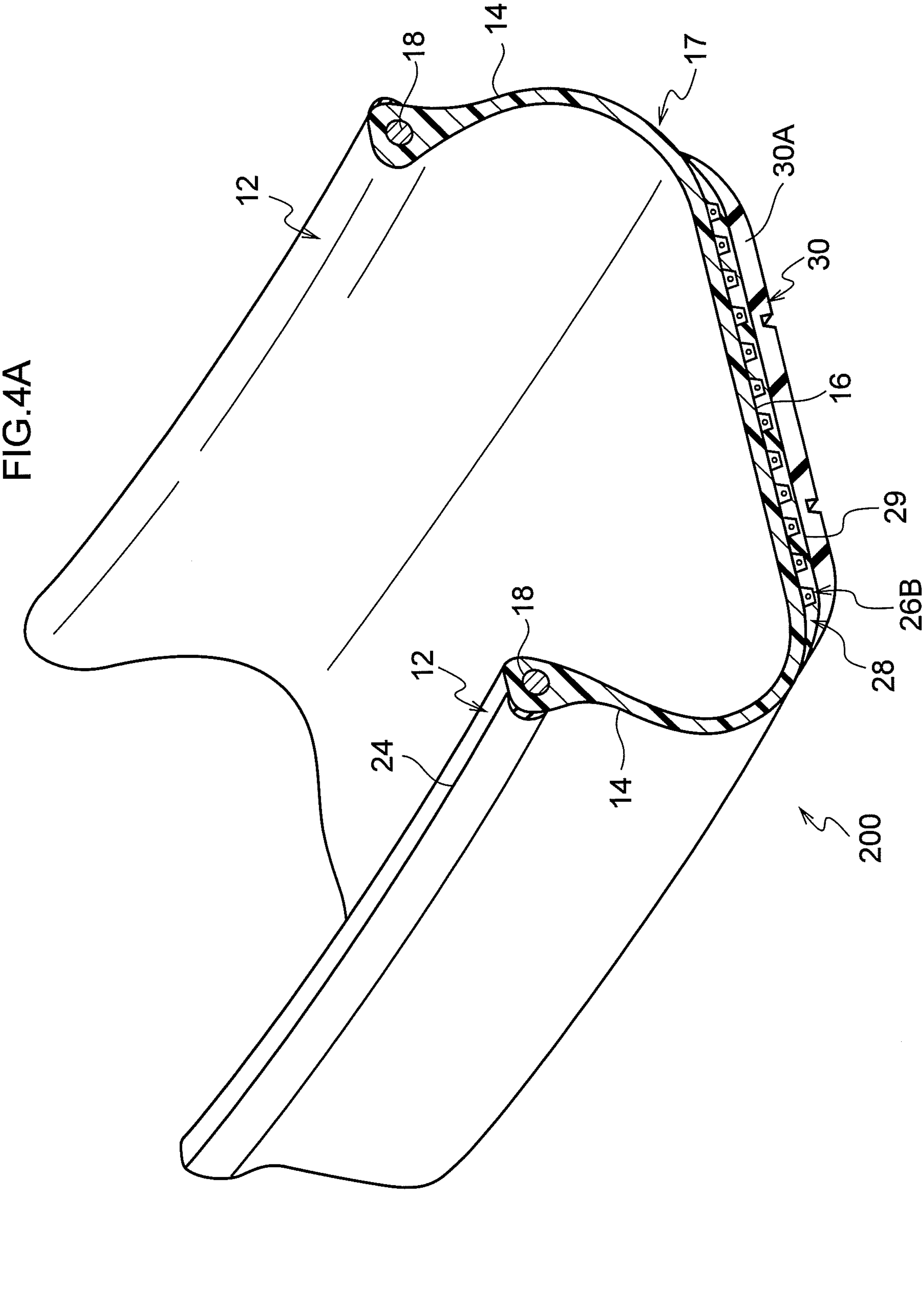

FIG.4B

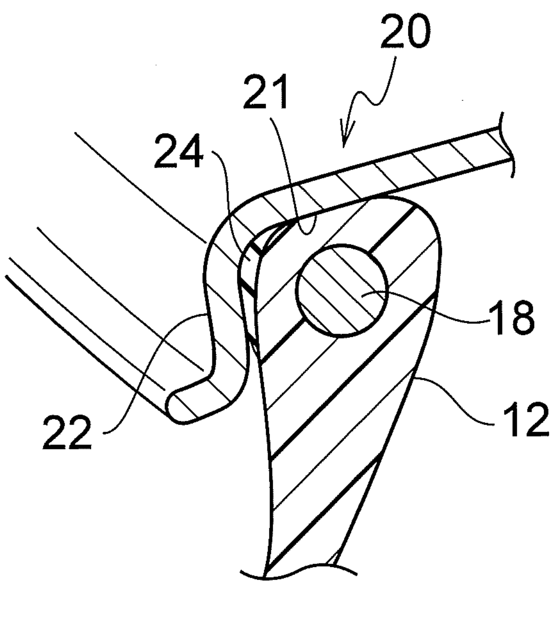

FIG.5

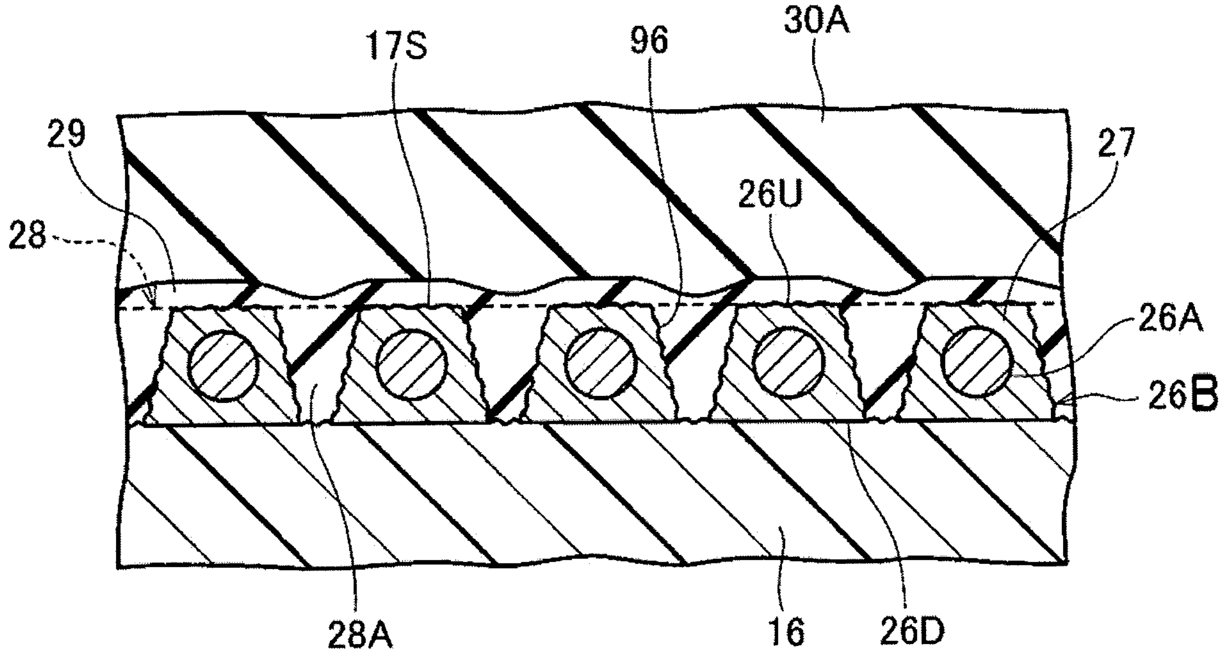

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003104008 A
- JP 3143701 A
- EP 1995275 A
- JP H05331256 A
- US 4141927 A
- JP 2622678 B
- JP 2606912 B
- JP 2606914 B
- JP 2596565 B
- JP 2596566 B
- JP 2598478 B
- JP 2598536 B
- JP 2599171 B
- JP H0948852 A
- JP 2565556 B
- JP 2564636 B
- JP 2564637 B
- JP 2563548 B
- JP 2563547 B
- JP 2558341 B
- JP 2558339 B
- JP 2834580 B
- JP H11048264 A
- JP H11029658 B
- JP 2003238744 A